# EUROPEAN PATENT APPLICATION

(11) **EP 4 597 865 A1**
(43) Date of publication of application: **06.08.2025**
(21) Application number: 23870335.9
(22) Date of filing: 13.09.2023
(51) Int. Cl.: H04B 7/06

(54) **MODEL INFORMATION REPORTING METHOD, DEVICE AND APPARATUS, AND STORAGE MEDIUM**

(30) Priority: 30.09.2022 CN 202211215756
(71) Applicant: Datang Mobile Communications Equipment Co., Ltd., Beijing 100085 (CN)
(72) Inventor: WANG, Da, Beijing 100085 (CN); GAO, Qiubin, Beijing 100085 (CN)
(74) Representative: Ipsilon
(86) International application number: PCT/CN2023/118607
(87) International publication number: WO 2024/067098

(57) **Abstract**

The present disclosure provides a model information reporting method, device and apparatus, and a storage medium. The method comprises: a terminal determining first information, the first information being used for indicating one or more artificial intelligence or machine learning (AI/ML) models, and the AI/ML models being used for downlink beam prediction; and sending the first information to a network device.

## Description

### CROSS-REFERENCES TO RELATED APPLICATIONS

The present application claims priority to Chinese patent application No. 202211215756.9 filed on September 30, 2022, entitled "Model Information Reporting Method, Device and Apparatus, and Storage Medium", which is incorporated herein by reference in its entirety.

### FIELD

The present application relates to the field of radio communication, and in particular, to methods and apparatuses for model information reporting, devices and a storage medium.

### BACKGROUND

In a new radio (NR) downlink beam management scenario, a way for determining the best downlink beam requires that a base station cyclically transmits a transmission (Tx) beam in different directions, and a user equipment (UE) uses a reception (Rx) beam to receive the Tx beam and measures channel state information reference signals (CSI-RSs) or synchronization signal block (SSB) signals transmitted on all Tx beams, and selects a beam with the best reception performance (such as reference signal received power (RSRP)) for the base station to use the downlink beam to transmit subsequent information to the UE.

In implementation schemes of the related art, CSI-RS or SSB signal needs to be transmitted on all Tx beams, which consumes a lot of resources. In addition, the UE needs to measure the CSI-RSs or SSB signals transmitted on all Tx beams respectively, resulting in a complex implementation for the UE and a large measurement overhead.

### BRIEF SUMMARY

In view of the problems in the related art, embodiments of the present application provide methods and apparatuses for model information reporting, devices and a storage medium, to support artificial intelligence (AI) or machine learning (ML) technology to predict downlink beam.

An embodiment of the present application provides a method for model information reporting, performed by a user equipment (UE), including:
determining first information, where the first information is used to indicate one or more artificial intelligence (AI) or machine learning (ML) models, and the one or more AI/ML models are used for downlink beam prediction; and
transmitting the first information to a network device.

In some embodiments, the first information includes one or more of the following:
a model identification;
an application scenario of a model;
a network device configuration applicable to a model;
a model function;
a quantity of input beams of a model;
a quantity of output beams of a model;
a type of a downlink reference signal (RS) applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

In some embodiments, transmitting the first information to the network device includes:
transmitting a first signaling to the network device, where the first signaling includes the first information;
where the first signaling includes one or more of the following:
   a UE capability signaling;
   an uplink control information (UCI) signaling;
   a radio resource control (RRC) signaling;
   a signaling for transmitting data information; or
   a signaling for model registration.

In some embodiments, transmitting the first information to the network device includes:
receiving a *UECapabilityEnquiry* message transmitted from the network device, where the *UECapabilityEnquiry* message includes one or more of an application scenario, a network device configuration, a model function, or a maximum feedback quantity of models; and
transmitting *UECapabilityInformation* to the network device based on the *UECapabilityEnquiry* message, where the *UECapabilityInformation* includes the first information.

In some embodiments, transmitting the first information to the network device includes:
receiving a UCI feedback resource configuration message transmitted from the network device, where the UCI feedback resource configuration message includes one or more of a UCI feedback resource time-frequency position, an application scenario, a network device configuration, a model function, or a maximum feedback quantity of models; and
transmitting UCI to the network device based on the UCI feedback resource configuration message, where the UCI includes the first information.

In some embodiments, transmitting the first information to the network device includes:
receiving an RRC request message transmitted from the network device, where the RRC request message includes one or more of an application scenario, a network device configuration, a model function, or a maximum feedback quantity of models; and
transmitting an RRC response message to the network device based on the RRC request message, where the RRC response message includes the first information.

In some embodiments, transmitting the first information to the network device includes:
receiving a measurement configuration message transmitted from the network device, where the measurement configuration message includes one or more of a measurement configuration, an application scenario, a network device configuration, a model function, or a maximum feedback quantity of models; and
transmitting an RRC signaling, a UCI signaling, or a signaling for transmitting data information to the network device based on the measurement configuration message, where the RRC signaling, the UCI signaling, or the signaling for transmitting data information includes the first information.

In some embodiments, transmitting the first information to the network device includes:
receiving a model registration trigger message transmitted from the network device, where the model registration trigger message includes one or more of an application scenario, a network device configuration, a model function, or a maximum feedback quantity of models; and
transmitting model registration information to the network device based on the model registration trigger message, where the model registration information includes the first information.

In some embodiments, after transmitting the first information to the network device, the method further includes:
receiving a radio resource control (RRC) configuration message transmitted from the network device, where the RRC configuration message includes one or more model identifications; and
determining an AI/ML model for downlink beam prediction based on the RRC configuration message.

In some embodiments, the method further includes:
receiving a radio resource control (RRC) signaling or a media access control-control element (MAC-CE) transmitted from the network device, where the RRC signaling or the MAC-CE includes one or more of a model identification, an activation indication, a deactivation indication, or a fallback indication; and
performing model activation or deactivation or fallback operations based on the RRC signaling or the MAC-CE.

In some embodiments, after transmitting the first information to the network device, the method further includes:
receiving a model identification assignment message transmitted from the network device, where the model identification assignment message includes a model identification assigned by the network device; and
associating the model identification assigned by the network device with a model indicated by the first information based on the model identification assignment message.

An embodiment of the present application provides a method for model information reporting, performed by a network device, including:
receiving first information transmitted from a user equipment (UE), where the first information is used to indicate one or more artificial intelligence (AI) or machine learning (ML) models, and the one or more AI/ML models are used for downlink beam prediction.

In some embodiments, the first information includes one or more of the following:
a model identification;
an application scenario of a model;
a network device configuration applicable to a model;
a model function;
a quantity of input beams of a model;
a quantity of output beams of a model;
a type of a downlink reference signal (RS) applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

In some embodiments, receiving the first information transmitted from the UE includes:
receiving a first signaling transmitted from the UE, where the first signaling includes the first information;
where the first signaling includes one or more of the following:
   a UE capability signaling;
   an uplink control information (UCI) signaling;
   a radio resource control (RRC) signaling;
   a signaling for transmitting data information; or
   a signaling for model registration.

In some embodiments, receiving the first information transmitted from the UE includes:
transmitting a *UECapabilityEnquiry* message to the UE, where the *UECapabilityEnquiry* message includes one or more of an application scenario, a network device configuration, a model function, or a maximum feedback quantity of models; and
receiving *UECapabilityInformation* transmitted from the UE, where the *UECapabilityInformation* includes the first information.

In some embodiments, receiving the first information transmitted from the UE includes:
transmitting a UCI feedback resource configuration message to the UE, where the UCI feedback resource configuration message includes one or more of a UCI feedback resource time-frequency position, an application scenario, a network device configuration, a model function, or a maximum feedback quantity of models; and
receiving UCI transmitted from the UE, where the UCI includes the first information.

In some embodiments, receiving the first information transmitted from the UE includes:
transmitting an RRC request message to the UE, where the RRC request message includes one or more of an application scenario, a network device configuration, a model function, or a maximum feedback quantity of models; and
receiving an RRC response message transmitted from the UE, where the RRC response message includes the first information.

In some embodiments, receiving the first information transmitted from the UE includes:
transmitting a measurement configuration message to the UE, where the measurement configuration message includes one or more of a measurement configuration, an application scenario, a network device configuration, a model function, or a maximum feedback quantity of models; and
receiving an RRC signaling, a UCI signaling, or a signaling for transmitting data information transmitted from the UE, where the RRC signaling, the UCI signaling, or the signaling for transmitting data information includes the first information.

In some embodiments, receiving the first information transmitted from the UE includes:
transmitting a model registration trigger message to the UE, where the model registration trigger message includes one or more of an application scenario, a network device configuration, a model function, or a maximum feedback quantity of models; and
receiving model registration information transmitted from the UE, where the model registration information includes the first information.

In some embodiments, after receiving the first information transmitted from the UE, the method further includes:
transmitting a radio resource control (RRC) configuration message to the UE based on the first information, where the RRC configuration message includes one or more model identifications.

In some embodiments, the method further includes:
transmitting a radio resource control (RRC) signaling or a media access control-control element (MAC-CE) to the UE, where the RRC signaling or the MAC-CE includes one or more of a model identification, an activation indication, a deactivation indication, or a fallback indication.

In some embodiments, after receiving the first information transmitted from the UE, the method further includes:
transmitting a model identification assignment message to the UE based on the first information, where the model identification assignment message includes a model identification assigned by the network device.

An embodiment of the present application provides a user equipment (UE), including a memory, a transceiver, and a processor;
where the memory is used for storing a computer program, the transceiver is used for receiving and transmitting data under control of the processor and the processor is used for reading the computer program in the memory and performing the following operations:
determining first information, where the first information is used to indicate one or more artificial intelligence (AI) or machine learning (ML) models, and the one or more AI/ML models are used for downlink beam prediction; and
transmitting the first information to a network device.

In some embodiments, the first information includes one or more of the following:
a model identification;
an application scenario of a model;
a network device configuration applicable to a model;
a model function;
a quantity of input beams of a model;
a quantity of output beams of a model;
a type of a downlink reference signal (RS) applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

In some embodiments, transmitting the first information to the network device includes:
transmitting a first signaling to the network device, where the first signaling includes the first information;
where the first signaling includes one or more of the following:
   a UE capability signaling;
   an uplink control information (UCI) signaling;
   a radio resource control (RRC) signaling;
   a signaling for transmitting data information; or
   a signaling for model registration.

In some embodiments, transmitting the first information to the network device includes:
receiving a *UECapabilityEnquiry* message transmitted from the network device, where the *UECapabilityEnquiry* message includes one or more of an application scenario, a network device configuration, a model function, or a maximum feedback quantity of models; and
transmitting *UECapabilityInformation* to the network device based on the *UECapabilityEnquiry* message, where the *UECapabilityInformation* includes the first information.

In some embodiments, transmitting the first information to the network device includes:
receiving a UCI feedback resource configuration message transmitted from the network device, where the UCI feedback resource configuration message includes one or more of a UCI feedback resource time-frequency position, an application scenario, a network device configuration, a model function, or a maximum feedback quantity of models; and
transmitting UCI to the network device based on the UCI feedback resource configuration message, where the UCI includes the first information.

In some embodiments, transmitting the first information to the network device includes:
receiving an RRC request message transmitted from the network device, where the RRC request message includes one or more of an application scenario, a network device configuration, a model function, or a maximum feedback quantity of models; and
transmitting an RRC response message to the network device based on the RRC request message, where the RRC response message includes the first information.

In some embodiments, transmitting the first information to the network device includes:
receiving a measurement configuration message transmitted from the network device, where the measurement configuration message includes one or more of a measurement configuration, an application scenario, a network device configuration, a model function, or a maximum feedback quantity of models; and
transmitting an RRC signaling, a UCI signaling, or a signaling for transmitting data information to the network device based on the measurement configuration message, where the RRC signaling, the UCI signaling, or the signaling for transmitting data information includes the first information.

In some embodiments, transmitting the first information to the network device includes:
receiving a model registration trigger message transmitted from the network device, where the model registration trigger message includes one or more of an application scenario, a network device configuration, a model function, or a maximum feedback quantity of models; and
transmitting model registration information to the network device based on the model registration trigger message, where the model registration information includes the first information.

In some embodiments, after transmitting the first information to the network device, the operations further include:
receiving a radio resource control (RRC) configuration message transmitted from the network device, where the RRC configuration message includes one or more model identifications; and
determining an AI/ML model for downlink beam prediction based on the RRC configuration message.

In some embodiments, the operations further include:
receiving a radio resource control (RRC) signaling or a media access control-control element (MAC-CE) transmitted from the network device, where the RRC signaling or the MAC-CE includes one or more of a model identification, an activation indication, a deactivation indication, or a fallback indication; and
performing model activation or deactivation or fallback operations based on the RRC signaling or the MAC-CE.

In some embodiments, after transmitting the first information to the network device, the operations further include:
receiving a model identification assignment message transmitted from the network device, where the model identification assignment message includes a model identification assigned by the network device; and
associating the model identification assigned by the network device with a model indicated by the first information based on the model identification assignment message.

An embodiment of the present application further provides a network device, including a memory, a transceiver and a processor,
where the memory is used for storing a computer program, the transceiver is used for receiving and transmitting data under control of the processor and the processor is used for reading the computer program in the memory and performing the following operations:
receiving first information transmitted from a user equipment (UE), where the first information is used to indicate one or more artificial intelligence (AI) or machine learning (ML) models, and the one or more AI/ML models are used for downlink beam prediction.

In some embodiments, the first information includes one or more of the following:
a model identification;
an application scenario of a model;
a network device configuration applicable to a model;
a model function;
a quantity of input beams of a model;
a quantity of output beams of a model;
a type of a downlink reference signal (RS) applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

In some embodiments, receiving the first information transmitted from the UE includes:
receiving a first signaling transmitted from the UE, where the first signaling includes the first information;
where the first signaling includes one or more of the following:
   a UE capability signaling;
   an uplink control information (UCI) signaling;
   a radio resource control (RRC) signaling;
   a signaling for transmitting data information; or
   a signaling for model registration.

In some embodiments, receiving the first information transmitted from the UE includes:
transmitting a *UECapabilityEnquiry* message to the UE, where the *UECapabilityEnquiry* message includes one or more of an application scenario, a network device configuration, a model function, or a maximum feedback quantity of models; and
receiving *UECapabilityInformation* transmitted from the UE, where the *UECapabilityInformation* includes the first information.

In some embodiments, receiving the first information transmitted from the UE includes:
transmitting a UCI feedback resource configuration message to the UE, where the UCI feedback resource configuration message includes one or more of a UCI feedback resource time-frequency position, an application scenario, a network device configuration, a model function, or a maximum feedback quantity of models; and
receiving UCI transmitted from the UE, where the UCI includes the first information.

In some embodiments, receiving the first information transmitted from the UE includes:
transmitting an RRC request message to the UE, where the RRC request message includes one or more of an application scenario, a network device configuration, a model function, or a maximum feedback quantity of models; and
receiving an RRC response message transmitted from the UE, where the RRC response message includes the first information.

In some embodiments, receiving the first information transmitted from the UE includes:
transmitting a measurement configuration message to the UE, where the measurement configuration message includes one or more of a measurement configuration, an application scenario, a network device configuration, a model function, or a maximum feedback quantity of models; and
receiving an RRC signaling, a UCI signaling, or a signaling for transmitting data information transmitted from the UE, where the RRC signaling, the UCI signaling, or the signaling for transmitting data information includes the first information.

In some embodiments, receiving the first information transmitted from the UE includes:
transmitting a model registration trigger message to the UE, where the model registration trigger message includes one or more of an application scenario, a network device configuration, a model function, or a maximum feedback quantity of models; and
receiving model registration information transmitted from the UE, where the model registration information includes the first information.

In some embodiments, after receiving the first information transmitted from the UE, the operations further include:
transmitting a radio resource control (RRC) configuration message to the UE based on the first information, where the RRC configuration message includes one or more model identifications.

In some embodiments, the operations further include:
transmitting a radio resource control (RRC) signaling or a media access control-control element (MAC-CE) to the UE, where the RRC signaling or the MAC-CE includes one or more of a model identification, an activation indication, a deactivation indication, or a fallback indication.

In some embodiments, after receiving the first information transmitted from the UE, the operations further include:
transmitting a model identification assignment message to the UE based on the first information, where the model identification assignment message includes a model identification assigned by the network device.

An embodiment of the present application provides an apparatus for model information reporting, including:
a determining unit, used for determining first information, where the first information is used to indicate one or more artificial intelligence (AI) or machine learning (ML) models, and the one or more AI/ML models are used for downlink beam prediction; and
a first transmitting unit, used for transmitting the first information to a network device.

An embodiment of the present application provides an apparatus for model information reporting, including:
a third receiving unit, used for receiving first information transmitted from a user equipment (UE), where the first information is used to indicate one or more artificial intelligence (AI) or machine learning (ML) models, and the one or more AI/ML models are used for downlink beam prediction.

The present application further provides a computer-readable storage medium storing a computer program, where the computer program causes a computer to perform any of the methods for model information reporting described above.

The present application further provides a communication device storing a computer program, where the computer program causes a communication device to perform any of the methods for model information reporting described above.

The present application further provides a processor-readable storage medium storing a computer program, where the computer program causes a processor to perform any of the methods for model information reporting described above.

The present application further provides a chip product storing a computer program, where the computer program causes a chip product to perform any of the methods for model information reporting described above.

In the methods and apparatuses for model information reporting, the devices and the storage medium provided by the present application, the UE may report associated information of one or more AI/ML models to the network device through the first information, the network device may subsequently activate the use of the model and configure a transmit pattern of Tx beams as needed, to improve transmission performance of a system and better support beam management and beam prediction using AI/ML technology.

### BRIEF DESCRIPTION OF THE DRAWINGS

To illustrate solutions in the embodiments of the present application more clearly, the drawings that need to be used in the descriptions of the embodiments are briefly described below. The drawings in the following description are some embodiments of the present application, and other drawings may be obtained based on these drawings without any creative work for those skilled in the related art.
FIG. 1 is a first schematic flowchart of a method for model information reporting according to an embodiment of the present application;
FIG. 2 is a second schematic flowchart of a method for model information reporting according to an embodiment of the present application;
FIG. 3 is a first schematic diagram of implementing a method for model information reporting according to an embodiment of the present application;
FIG. 4 is a second schematic diagram of implementing a method for model information reporting according to an embodiment of the present application;
FIG. 5 is a third schematic diagram of implementing a method for model information reporting according to an embodiment of the present application;
FIG. 6 is a fourth schematic diagram of implementing a method for model information reporting according to an embodiment of the present application;
FIG. 7 is a fifth schematic diagram of implementing a method for model information reporting according to an embodiment of the present application;
FIG. 8 is a schematic structural diagram of a user equipment (UE) according to an embodiment of the present application;
FIG. 9 is a schematic structural diagram of a network device according to an embodiment of the present application;
FIG. 10 is a first schematic structural diagram of an apparatus for model information reporting according to an embodiment of the present application; and
FIG. 11 is a second schematic structural diagram of an apparatus for model information reporting according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Some contents associated with the embodiments of the present application are firstly introduced to facilitate a clearer understanding of the solutions of the embodiments of the present application.

### 1. Three ways to calculate the best downlink (DL) beam

One way is to measure reference signal received power (RSRP) for all DL beam pairs (a beam pair consisting of a base station transmission (Tx) beam and a user equipment (UE) reception (Rx) beam) to obtain a beam pair corresponding to the maximum RSRP, that is, the best beam pair, and inform a base station. The base station uses a Tx beam in the best beam pair to transmit information to the UE, and the UE uses a Rx beam in the beam pair to receive the information.

Another way is that the UE fixes or selects a best DL Rx beam, receives the DL Tx beams transmitted from the base station and measures the RSRP for all DL Tx beams transmitted from the base station to obtain a Tx beam corresponding to the maximum RSRP, that is, the best Tx beam, and informs the base station. The base station uses the Tx beam to transmit information to the UE.

Another way is that the base station fixes or selects a best DL Tx beam, and the UE receives the best DL Tx beam transmitted from the base station using all DL Rx beams and measures the corresponding RSRP to obtain a Rx beam corresponding to the maximum RSRP, that is, the best Rx beam. The UE uses the best Rx beam to receive information in case that the base station uses the best Tx beam to transmit the information to the UE.

As mentioned above, for the way of measuring DL beam pair, the UE needs to receive channel state information reference signal (CSI-RS)/synchronization signal block (SSB) on each Tx beam transmitted from the base station for measurement using all Rx beams. For example, there are 4 UE Rx beams and 32 base station Tx beams. If the UE uses all Rx beams to receive each Tx beam respectively, the UE needs to measure 4*32=128 CSI-RS/SSBs, that is, all Tx beams need to be measured for each Rx beam to calculate the best beam pair. For the way of measuring DL Tx beam, the UE fixes or selects the best Rx beam and measures all Tx beams transmitted from the base station. The UE needs to measure 32 Tx beams to obtain the best Tx beam. The same problem exists for the way of measuring DL Rx beam.

It is considered that the above ways need to measure all Rx beams and Tx beams, the reference signals used for measurement occupy a large amount of transmission resources, the UE measurement complexity is high, the measurement consumption is large, and the UE measurement delay is high. The present application provides a method for downlink beam prediction using artificial intelligence (AI) or machine learning (ML) technology. For the way of measuring DL beam pair, only a part of the DL beam pairs needs to be measured. For example, only 8 of 32 Tx beams are transmitted, and the UE only needs to measure the CSI-RS/SSB for 4*8=32 beam pairs to accurately predict the beam pair with the best reception performance among the 128 beam pairs consisting of 32 Tx beams and 4 Rx beams. For the way of measuring DL Tx beam, the UE fixes or selects the best Rx beam and only needs to measure 8 Tx beams to accurately predict the Tx beam with the best reception performance among the 32 Tx beams. The present application may also be used in other scenarios, such as measuring other wide beams that are easy to be measured and are used for transmitting SSB, or measuring beams in other frequency bands to predict a narrow beam that transmits CSI-RS, or predict the best beam in the high-frequency beam. For example, the beam (pair) with the best reception performance in the beam pair or Tx beam transmitted from the base station in the future is predicted using the previous beam measurement results. For example, in DL Rx beam prediction, the base station fixes or selects the best Tx beam and continuously transmits a reference signal (RS), and the UE uses different DL Rx beams to receive and measure the RS, and predicts the best Rx beam through the measurement results. In this way, RS transmission resources and UE measurement overhead may be saved and UE measurement delay is reduced.

For how the UE reports model information to the base station when using AI/ML technology for beam management and beam prediction, the present application provides a clear solution.

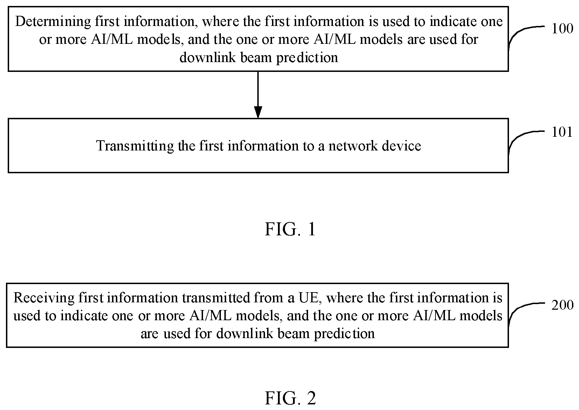

FIG. 1 is a first schematic flowchart of a method for model information reporting according to an embodiment of the present application. The method may be performed by a user equipment (UE). As shown in FIG. 1, the method includes the following steps:
step 100: determining first information, where the first information is used to indicate one or more artificial intelligence (AI) or machine learning (ML) models, and the one or more AI/ML models are used for downlink beam prediction; and
step 101: transmitting the first information to a network device.

In the embodiment of the present application, in order to better support beam management and beam prediction using the AI/ML technology, the UE reports the first information to the network device (such as a base station), and the first information is used to indicate one or more AI/ML models, which are AI/ML models that may be used for downlink beam prediction (hereinafter referred to as models). The downlink beam refers to the downlink beam used for information transmission between the network device and the UE, including a downlink transmission beam (Tx beam), a downlink reception beam (Rx beam), a downlink beam pair (beam pair), etc.

After receiving the first information transmitted from the UE, the network device may know which models the UE may use and associated information of these models, and may subsequently perform procedures of model selection and activation, etc., based on this information as needed.

In some embodiments, the model indicated in the first information may be a model stored by the UE itself, or may be a model stored by a third-party device, which is not limited here.

In the case where the third-party device stores the model, the UE may report information of the model stored in the third-party device to the network device, and then download the corresponding model from the third-party device for use based on an indication (such as configuration, activation or selection command) from the network device.

In some embodiments, the first information may include one or more of the following.

### (1) A model identification.

In an embodiment, the first information may include a model identification, which may be a sequence number or a serial number of the model, or identification information representing a model type, or other identification information that may distinguish different models.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

All of the dataset identification for model training, the RS configuration identification for model training, the beam description information identification for model training and the information on the quantity of input beams and the quantity of output beams for the model may be understood as identification information representing the model type, as described below.

Dataset identification: the dataset is a dataset used for model training. The UE may train different models through different datasets. If the datasets are in one-to-one correspondence with the trained models, the dataset identification may represent the model identification. For example, the dataset may include a dataset identification and one or more dataset samples, where the dataset samples may include: multiple beam identifications, and measurement results of the beams corresponding to the beam identifications, and one or more best beam identifications (as output labels for AI/ML model training).

RS configuration identification: an RS configuration is an RS configuration for model training. The UE may measure a downlink reference signal based on the RS configuration and train the model using the measurement results. If the RS configurations are in one-to-one correspondence with the trained models, the RS configuration identification may represent the model identification. For example, the RS configuration may include an RS configuration identification, an RS type, an RS transmission resource, an RS identification, etc.

Beam description information identification: the UE may train the models using the beam description information and the measurement results of the downlink reference signals. If the beam description information is in one-to-one correspondence with the trained models, the beam description information identification may represent the model identification. For example, the beam description information may include beam identifications or RS identifications, network device antenna configuration of the beam corresponding to each beam identification or RS identification, angle information of a beam, width information of a beam, etc.

Information on the quantity of input beams and the quantity of output beams for the model: in a possible implementation, the information on the quantity of input beams and the quantity of output beams for the model may be information of a pair of {quantity of input beams, quantity of output beams}, such as information on a pair of {quantity of input Tx beams, quantity of output Tx beams}, or information on a pair of {quantity of input Rx beams, quantity of output Rx beams}. The UE may only train one model for each pair of {quantity of input beams, quantity of output beams}, and the pair of{quantity of input beams, quantity of output beams} may represent the model.

In some embodiments, in one implementation, the first information may not include a model identification. After transmitting, by the UE, the first information to the network device, the method further includes:
receiving a model identification assignment message transmitted from the network device, where the model identification assignment message includes a model identification assigned by the network device; and
associating the model identification assigned by the network device with a model indicated by the first information based on the model identification assignment message.

In an embodiment, in case that the first information does not include the model identification, after receiving the first information transmitted from the UE, the network device may assign model identifications corresponding to the models reported by the UE based on the model information reported by the UE.

After determining the assigned model identification, the network device may transmit a model identification assignment message to the UE, where the model identification assignment message includes a model identification assigned by the network device. In some embodiments, the model identification assignment message may further include model information corresponding to each model identification (one or more items in the first information), or other indication information. These pieces of indication information may be used to indicate an association relationship between the assigned model identification and the model indicated by the first information, and then the UE may associate the model identification assigned by the network device with the model indicated by the first information based on the model identification assignment message.

In a possible implementation, the model identification assignment message includes the model identification assigned by the network device, but does not include explicit indication information indicating the association relationship between the assigned model identification and the model indicated by the first information. After receiving the model identification assignment message transmitted from the network device, the UE may default to associating the model identification assigned by the network device with the model indicated in the first information sequentially according to an order of the model information in the first information reported by the UE.

### (2) An application scenario of a model.

In an embodiment, the UE may report the scenario applicable to the model. For example, the application scenario may include: urban, rural, indoor, outdoor, highway, high-speed rail, Uma (urban macro cell), Umi (urban micro cell), etc.

The application scenario of the model reported by the UE may be used for subsequent network device to select and activate a suitable model used by the UE for beam prediction based on the application scenario.

### (3) A network device configuration applicable to a model.

In an embodiment, the UE may report the network device configuration applicable to the model. For example, the network device configuration may include: network device antenna configuration, beam configuration, reference signal configuration, etc.

The network device configuration applicable to the model reported by the UE may be used for subsequent network device to select and activate a suitable model used by the UE for beam prediction based on the network device configuration.

### (4) A model function.

In an embodiment, the UE may report the model function. For example, the model function may include: spatial-domain prediction, frequency-domain prediction, time-domain prediction, downlink beam pair prediction, downlink Tx beam prediction, downlink Rx beam prediction, etc. Spatial-domain prediction refers to measuring a small quantity of beams, or beams of other reference signal types, and predicting the best beam among a large quantity of beams. Frequency-domain prediction refers to measuring the beams on frequency 1 and predicting the best beam among beams on frequency 2. Time-domain prediction refers to measuring the beam at a current moment and predicting the best beam at a future moment.

The model function reported by the UE may be used for subsequent network devices to select and activate a suitable model used by the UE for beam prediction based on the model function.

### (5) a quantity of input beams of a model.

In an embodiment, the UE may report the quantity of input beams of the model, such as a quantity of input Tx beams of the model, or a quantity of input Rx beams of the model, or a quantity of input beam pairs of the model, etc.

The UE reports the quantity of input beams of the model, and the network device may configure and transmit Tx beams after selecting the model used by the UE, to improve the UE prediction performance.

### (6) A quantity of output beams of a model.

In an embodiment, the UE may report the quantity of output beams of the model, such as a quantity of output Tx beams of the model, or a quantity of output Rx beams of the model, or a quantity of output beam pairs of the model, etc.

The UE reports the quantity of output beams of the model, and the network device may subsequently schedule the UE to feedback the best beam output from the model, such as indicating the quantity of Tx beams fed back by the UE.

### (7) A type of downlink reference signal applicable to a model.

In an embodiment, the UE may report the type of downlink reference signal applicable to the model. The type of downlink reference signal may include: a channel state information reference signal (CSI-RS), a synchronization signal block (SSB), a phase-tracking reference signal (PT-RS), a cell reference signal (CRS), a demodulation reference signal (DMRS), etc.

### (8) A transmission sequence of downlink beams applicable to a model.

The UE reports the transmission sequence of downlink beams applicable to the model, and the network device may configure and transmit Tx beams after selecting the model used by the UE, to improve the beam prediction performance.

### (9) A downlink beam pattern applicable to a model.

The UE reports the downlink beam pattern applicable to the model, and the network device may configure and transmit Tx beams after selecting the model used by the UE, to improve the beam prediction performance.

### (10) A mapping relationship between a downlink beam identification and a physical downlink beam applicable to a model.

In an embodiment, the UE may report the mapping relationship between the downlink beam identification and the physical downlink beam applicable to the model, and the network device may be allowed to understand the beam identification (such as Tx beam ID) reported by the UE after the UE predicts the best beam, and transmit subsequent data information on the corresponding physical beam of the beam identification.

### (11) A downlink Tx beam identification applicable to a model.

In an embodiment, the UE may report the downlink Tx beam identification applicable to the model. For example, for a downlink Rx beam prediction scenario, the UE may recommend which Tx beam the network device should transmit by reporting the downlink Tx beam identification applicable to the model, the UE uses different Rx beams to receive the reference signal transmitted on the Tx beam for performing measurement, and predicts the best Rx beam based on the measurement results.

### (12) A quantity of times a downlink Tx beam is transmitted applicable to a model.

In an embodiment, the UE may report the quantity of times the downlink Tx beam is transmitted applicable to the model. For example, for a downlink Rx beam prediction scenario, the UE may recommend which Tx beam the network device should transmit and a quantity of times a reference signal transmitted on this Tx beam by reporting the quantity of times the downlink Tx beam is transmitted applicable to the model, the UE uses different Rx beams to receive the reference signal transmitted on the Tx beam for performing measurement, and predicts the best Rx beam based on the measurement results.

In the method for model information reporting provided by embodiments of the present application, the UE may report associated information of one or more AI/ML models to the network device through the first information, the network device may subsequently activate the use of the model and configure a transmit pattern of Tx beams as needed, to improve transmission performance of a system and better support beam management and beam prediction using AI/ML technology.

In some embodiments, transmitting, by the UE, the first information to the network device may include:
transmitting a first signaling to the network device, where the first signaling includes the first information;
where the first signaling may include one or more of the following.
   (1) UE capability signaling. For example, the UE may report the first information through the *UECapabilityInformation.*
   (2) Uplink control information (UCI) signaling. The UCI may be UCI transmitted over a physical uplink control channel (PUCCH) or a physical uplink shared channel (PUSCH).
   (3) Radio resource control (RRC) signaling.
   (4) A signaling for transmitting data information. The UE may report the first information to the network device by carrying the first information on the signaling for transmitting data information in case that the UE performs data information transmission.
   (5) A signaling for model registration. The UE may report the first information to the network device by carrying the first information on the signaling for model registration in case that the UE performs model registration.

In some embodiments, transmitting the first information to the network device includes:
receiving a *UECapabilityEnquiry* message transmitted from the network device, where the *UECapabilityEnquiry* message includes one or more of an application scenario, a network device configuration, a model function, or a maximum feedback quantity of models; and
transmitting *UECapabilityInformation* to the network device based on the *UECapabilityEnquiry* message, where the *UECapabilityInformation* includes the first information.

In an embodiment, the network device may transmit a *UECapabilityEnquiry* message to the UE to query the *UECapabilityInformation,* the *UECapabilityEnquiry* message may include one or more of an application scenario, a network device configuration, a model function, or a maximum feedback quantity of models.

The maximum feedback quantity of models refers to the maximum number of models that the UE may feed back. For example, the maximum feedback quantity of models is 6, that is, the UE may report information of at most 6 models.

After receiving the *UECapabilityEnquiry* message transmitted from the network device, the UE may feed back the corresponding model information in the *UECapabilityInformation* based on the *UECapabilityEnquiry* message.

For example, if the *UECapabilityEnquiry* message includes an application scenario, the UE may upload model information corresponding to the application scenario, and the model information of other application scenarios does not need to be uploaded, to reduce the amount of model information reported by the UE.

In some embodiments, transmitting the first information to the network device includes:
receiving a UCI feedback resource configuration message transmitted from the network device, where the UCI feedback resource configuration message includes one or more of a UCI feedback resource time-frequency position, an application scenario, a network device configuration, a model function, or a maximum feedback quantity of models; and
transmitting UCI to the network device based on the UCI feedback resource configuration message, where the UCI includes the first information.

In an embodiment, the network device may transmit a UCI feedback resource configuration message (for example, an RRC configuration message) to the UE to configure the UCI feedback resource for the UE, and the UCI feedback resource configuration message may include one or more of a UCI feedback resource time-frequency position, an application scenario, a network device configuration, a model function, or a maximum feedback quantity of models.

After receiving the UCI feedback resource configuration message transmitted from the network device, the UE may feed back UCI over the configured UCI feedback resource based on the UCI feedback resource configuration message, where the UCI includes the corresponding model information.

For example, if the UCI feedback resource configuration message includes an application scenario, the UE may upload model information corresponding to the application scenario, and the model information of other application scenarios does not need to be uploaded, to reduce the amount of model information reported by the UE.

In some embodiments, transmitting the first information to the network device includes:
receiving an RRC request message transmitted from the network device, where the RRC request message includes one or more of an application scenario, a network device configuration, a model function, or a maximum feedback quantity of models; and
transmitting an RRC response message to the network device based on the RRC request message, where the RRC response message includes the first information.

In an embodiment, the network device may transmit an RRC request message to the UE, for example, requesting the UE to report model information, where the RRC request message may include one or more of an application scenario, a network device configuration, a model function, or a maximum feedback quantity of models.

After receiving the RRC request message transmitted from the network device, the UE may feed back the corresponding model information through an uplink RRC message based on the RRC request message.

For example, if the RRC request message includes an application scenario, the UE may upload model information corresponding to the application scenario, and the model information of other application scenarios does not need to be uploaded, to reduce the amount of model information reported by the UE.

In some embodiments, transmitting the first information to the network device includes:
receiving a measurement configuration message transmitted from the network device, where the measurement configuration message includes one or more of a measurement configuration, an application scenario, a network device configuration, a model function, or a maximum feedback quantity of models; and
transmitting an RRC signaling, a UCI signaling, or a signaling for transmitting data information to the network device based on the measurement configuration message, where the RRC signaling, the UCI signaling, or the signaling for transmitting data information includes the first information.

In an embodiment, the network device may transmit a measurement configuration message to the UE, where the measurement configuration message may include one or more of a measurement configuration (such as Tx beam configuration, reference signal configuration, etc.), an application scenario, a network device configuration, a model function, or a maximum feedback quantity of models.

After receiving the measurement configuration message transmitted from the network device, the UE may feed back the corresponding model information based on the measurement configuration message. In some embodiments, the UE may feed back information of one or more models using the RRC signaling, the UCI signaling, or signaling for transmitting data information.

For example, the UE may determine the application scenario or network device configuration based on the measurement configuration message, selects one or more models applicable to the current application scenario or network device configuration, and reports the information of the one or more models to the network device, to reduce the amount of model information reported by the UE.

In some embodiments, transmitting the first information to the network device includes:
receiving a model registration trigger message transmitted from the network device, where the model registration trigger message includes one or more of an application scenario, a network device configuration, a model function, or a maximum feedback quantity of models; and
transmitting model registration information to the network device based on the model registration trigger message, where the model registration information includes the first information.

In an embodiment, the network device may transmit a model registration trigger message to the UE to trigger model registration, and the model registration trigger message may include one or more of an application scenario, a network device configuration, a model function, or a maximum feedback quantity of models.

After receiving the model registration trigger message transmitted from the network device, the UE may transmit model registration information to the network device based on the model registration trigger message, where the model registration information includes information of the corresponding model.

For example, if the model registration trigger message includes an application scenario, the UE may upload model information corresponding to the application scenario, and the model information of other application scenarios does not need to be uploaded, to reduce the amount of model information reported by the UE.

In some embodiments, after transmitting the first information to the network device, the method further includes:
receiving a radio resource control (RRC) configuration message transmitted from the network device, where the RRC configuration message includes one or more model identifications; and
determining an AI/ML model for downlink beam prediction based on the RRC configuration message.

In an embodiment, after receiving the first information reported by the UE, the network device may configure the model available to the UE through an RRC signaling (such as RRC configuration message) based on the model information reported by the UE, and the configuration information may include a model identification. After receiving the RRC configuration message transmitted from the network device, the UE may determine which model or models are used for downlink beam prediction.

For example, based on a current application scenario or network device configuration, the network device may select the model corresponding to the application scenario or network device configuration, and configure a model identification of the corresponding model to the UE.

In some embodiments, the network device may configure a set of models using the RRC signaling, and then activate one of the set of models through the media access control-control element (MAC-CE) for best beam prediction; or the RRC signaling only configures one model for best beam prediction; or the RRC signaling configures a set of models, and the UE selects one or more models from the set of models for best beam prediction.

In some embodiments, the method further includes:
receiving a radio resource control (RRC) signaling or a media access control-control element (MAC-CE) transmitted from the network device, where the RRC signaling or the MAC-CE includes one or more of a model identification, an activation indication, a deactivation indication, or a fallback indication; and
performing model activation or deactivation or fallback operations based on the RRC signaling or the MAC-CE.

In an embodiment, the network device may select to activate one or more models based on the current application scenario or network device configuration, which may be activated through the RRC signaling or the MAC-CE. The activation signaling may include an identification of an activated model and an activation indication.

In one implementation, in case that performance of the model is not good (for example, compared with the performance of other models, or compared with the performance of legacy methods), the network device selects to switch to other models, or deactivate the model, or fallback to the legacy method, and may activate/deactivate/fallback through the RRC, or activate/deactivate/fallback through the MAC-CE.

The activation/deactivation signaling includes the identification of the activated/deactivated model, and the activation/deactivation indication; the fallback signaling includes the fallback indication. The activation/deactivation/fallback indication may be a 1-bit indication.

FIG. 2 is a second schematic flowchart of a method for model information reporting according to an embodiment of the present application. The method may be performed by a network device (for example, a base station). As shown in FIG. 2, the method includes the following steps:
step 200: receiving first information transmitted from a user equipment (UE), where the first information is used to indicate one or more artificial intelligence (AI) or machine learning (ML) models, and the one or more AI/ML models are used for downlink beam prediction.

In an embodiment, in order to better support beam management and beam prediction using the AI/ML technology, the UE may report the first information to the network device, and the first information may be used to indicate one or more AI/ML models, which are AI/ML models that may be used for downlink beam prediction (hereinafter referred to as models). The downlink beam refers to the downlink beam used for information transmission between the network device and the UE, including a downlink transmission beam (Tx beam), a downlink reception beam (Rx beam), a downlink beam pair (beam pair), etc.

After receiving the first information transmitted from the UE, the network device may know which models the UE may use and associated information of these models, and may subsequently perform procedures of model selection and activation, etc., based on this information as needed.

In some embodiments, the model indicated in the first information may be a model stored by the UE itself, or may be a model stored by a third-party device, which is not limited here.

In the case where the third-party device stores the model, the UE may report information of the model stored in the third-party device to the network device, and then download the corresponding model from the third-party device for use based on an indication (such as configuration, activation or selection command) from the network device.

In some embodiments, the first information may include one or more of the following.

### (1) A model identification.

In an embodiment, the first information may include a model identification, which may be a sequence number or a serial number of the model, or identification information representing a model type, or other identification information that may distinguish different models.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

All of the dataset identification for model training, the RS configuration identification for model training, the beam description information identification for model training and the information on the quantity of input beams and the quantity of output beams for the model may be understood as identification information representing the model type, as described below.

Dataset identification: the dataset is a dataset used for model training. The UE may train different models through different datasets. If the datasets are in one-to-one correspondence with the trained models, the dataset identification may represent the model identification. For example, the dataset may include a dataset identification and one or more dataset samples, where the dataset samples may include: multiple beam identifications, and measurement results of the beams corresponding to the beam identifications, and one or more best beam identifications (as output labels for AI/ML model training).

RS configuration identification: an RS configuration is an RS configuration for model training. The UE may measure a downlink reference signal based on the RS configuration and train the model using the measurement results. If the RS configurations are in one-to-one correspondence with the trained models, the RS configuration identification may represent the model identification. For example, the RS configuration may include an RS configuration identification, an RS type, an RS transmission resource, an RS identification, etc.

Beam description information identification: the UE may train the models using the beam description information and the measurement results of the downlink reference signals. If the beam description information is in one-to-one correspondence with the trained models, the beam description information identification may represent the model identification. For example, the beam description information may include beam identifications or RS identifications, network device antenna configuration of the beam corresponding to each beam identification or RS identification, angle information of a beam, width information of a beam, etc.

Information on the quantity of input beams and the quantity of output beams for the model: in a possible implementation, the information on the quantity of input beams and the quantity of output beams for the model may be information of a pair of {quantity of input beams, quantity of output beams}, such as information on a pair of {quantity of input Tx beams, quantity of output Tx beams}, or information on a pair of {quantity of input Rx beams, quantity of output Rx beams}. The UE may only train one model for each pair of {quantity of input beams, quantity of output beams}, and the pair of{quantity of input beams, quantity of output beams} may represent the model.

In some embodiments, in one implementation, the first information may not include a model identification. After receiving, by the network device, the first information transmitted from the UE, the method further includes:
transmitting a model identification assignment message to the UE based on the first information, where the model identification assignment message includes a model identification assigned by the network device.

In an embodiment, in case that the first information does not include the model identification, after receiving the first information transmitted from the UE, the network device may assign model identifications corresponding to the models reported by the UE based on the model information reported by the UE.

After determining the assigned model identification, the network device may transmit a model identification assignment message to the UE, where the model identification assignment message includes a model identification assigned by the network device. In some embodiments, the model identification assignment message may further include model information corresponding to each model identification (one or more items in the first information), or other indication information. These pieces of indication information may be used to indicate an association relationship between the assigned model identification and the model indicated by the first information, and then the UE may associate the model identification assigned by the network device with the model indicated by the first information based on the model identification assignment message.

In a possible implementation, the model identification assignment message includes the model identification assigned by the network device, but does not include explicit indication information indicating the association relationship between the assigned model identification and the model indicated by the first information. After receiving the model identification assignment message transmitted from the network device, the UE may default to associating the model identification assigned by the network device with the model indicated in the first information sequentially according to an order of the model information in the first information reported by the UE.

### (2) An application scenario of a model.

In an embodiment, the UE may report the scenario applicable to the model. For example, the application scenario may include: urban, rural, indoor, outdoor, highway, high-speed rail, Uma (urban macro cell), Umi (urban micro cell), etc.

The application scenario of the model reported by the UE may be used for subsequent network device to select and activate a suitable model used by the UE for beam prediction based on the application scenario.

### (3) A network device configuration applicable to a model.

In an embodiment, the UE may report the network device configuration applicable to the model. For example, the network device configuration may include: network device antenna configuration, beam configuration, reference signal configuration, etc.

The network device configuration applicable to the model reported by the UE may be used for subsequent network device to select and activate a suitable model used by the UE for beam prediction based on the network device configuration.

### (4) A model function.

In an embodiment, the UE may report the model function. For example, the model function may include: spatial-domain prediction, frequency-domain prediction, time-domain prediction, downlink beam pair prediction, downlink Tx beam prediction, downlink Rx beam prediction, etc. Spatial-domain prediction refers to measuring a small quantity of beams, or beams of other reference signal types, and predicting the best beam among a large quantity of beams. Frequency-domain prediction refers to measuring the beams on frequency 1 and predicting the best beam among beams on frequency 2. Time-domain prediction refers to measuring the beam at a current moment and predicting the best beam at a future moment.

The model function reported by the UE may be used for subsequent network devices to select and activate a suitable model used by the UE for beam prediction based on the model function.

### (5) a quantity of input beams of a model.

In an embodiment, the UE may report the quantity of input beams of the model, such as a quantity of input Tx beams of the model, or a quantity of input Rx beams of the model, or a quantity of input beam pairs of the model, etc.

The UE reports the quantity of input beams of the model, and the network device may configure and transmit Tx beams after selecting the model used by the UE, to improve the UE prediction performance.

### (6) A quantity of output beams of a model.

In an embodiment, the UE may report the quantity of output beams of the model, such as a quantity of output Tx beams of the model, or a quantity of output Rx beams of the model, or a quantity of output beam pairs of the model, etc.

The UE reports the quantity of output beams of the model, and the network device may subsequently schedule the UE to feedback the best beam output from the model, such as indicating the quantity of Tx beams fed back by the UE.

### (7) A type of downlink reference signal applicable to a model.

In an embodiment, the UE may report the type of downlink reference signal applicable to the model. The type of downlink reference signal may include: a channel state information reference signal (CSI-RS), a synchronization signal block (SSB), a phase-tracking reference signal (PT-RS), a cell reference signal (CRS), a demodulation reference signal (DMRS), etc.

### (8) A transmission sequence of downlink beams applicable to a model.

The UE reports the transmission sequence of downlink beams applicable to the model, and the network device may configure and transmit Tx beams after selecting the model used by the UE, to improve the beam prediction performance.

### (9) A downlink beam pattern applicable to a model.

The UE reports the downlink beam pattern applicable to the model, and the network device may configure and transmit Tx beams after selecting the model used by the UE, to improve the beam prediction performance.

### (10) A mapping relationship between a downlink beam identification and a physical downlink beam applicable to a model.

In an embodiment, the UE may report the mapping relationship between the downlink beam identification and the physical downlink beam applicable to the model, and the network device may be allowed to understand the beam identification (such as Tx beam ID) reported by the UE after the UE predicts the best beam, and transmit subsequent data information on the corresponding physical beam of the beam identification.

### (11) A downlink Tx beam identification applicable to a model.

In an embodiment, the UE may report the downlink Tx beam identification applicable to the model. For example, for a downlink Rx beam prediction scenario, the UE may recommend which Tx beam the network device should transmit by reporting the downlink Tx beam identification applicable to the model, the UE uses different Rx beams to receive the reference signal transmitted on the Tx beam for performing measurement, and predicts the best Rx beam based on the measurement results.

### (12) A quantity of times a downlink Tx beam is transmitted applicable to a model.

In an embodiment, the UE may report the quantity of times the downlink Tx beam is transmitted applicable to the model. For example, for a downlink Rx beam prediction scenario, the UE may recommend which Tx beam the network device should transmit and a quantity of times a reference signal transmitted on this Tx beam by reporting the quantity of times the downlink Tx beam is transmitted applicable to the model, the UE uses different Rx beams to receive the reference signal transmitted on the Tx beam for performing measurement, and predicts the best Rx beam based on the measurement results.

In the method for model information reporting provided by embodiments of the present application, the network device may receive associated information of one or more AI/ML models transmitted from the UE, the network device may subsequently activate the use of the model and configure a transmit pattern of Tx beams as needed, to improve the system transmission performance and better support beam management and beam prediction using AI/ML technology.

In some embodiments, receiving, by the network device, the first information transmitted from the UE may include:
receiving a first signaling transmitted from the UE, where the first signaling includes the first information;
where the first signaling may include one or more of the following.
   (1) UE capability signaling. For example, the UE may report the first information through the *UECapabilityInformation.*
   (2) Uplink control information (UCI) signaling. The UCI may be UCI transmitted over a physical uplink control channel (PUCCH) or a physical uplink shared channel (PUSCH).
   (3) Radio resource control (RRC) signaling.
   (4) A signaling for transmitting data information.
   (5) A signaling for model registration.

In some embodiments, receiving the first information transmitted from the UE includes:
transmitting a *UECapabilityEnquiry* message to the UE, where the *UECapabilityEnquiry* message includes one or more of an application scenario, a network device configuration, a model function, or a maximum feedback quantity of models; and
receiving *UECapabilityInformation* transmitted from the UE, where the *UECapabilityInformation* includes the first information.

In an embodiment, the network device may transmit a *UECapabilityEnquiry* message to the UE to query the *UECapabilityInformation,* the *UECapabilityEnquiry* message may include one or more of an application scenario, a network device configuration, a model function, or a maximum feedback quantity of models.

After receiving the *UECapabilityEnquiry* message transmitted from the network device, the UE may feed back the corresponding model information in the *UECapabilityInformation* based on the *UECapabilityEnquiry* message.

For example, if the *UECapabilityEnquiry* message includes an application scenario, the UE may upload model information corresponding to the application scenario, and the model information of other application scenarios does not need to be uploaded, to reduce the amount of model information reported by the UE.

In some embodiments, receiving the first information transmitted from the UE includes:
transmitting a UCI feedback resource configuration message to the UE, where the UCI feedback resource configuration message includes one or more of a UCI feedback resource time-frequency position, an application scenario, a network device configuration, a model function, or a maximum feedback quantity of models; and
receiving UCI transmitted from the UE, where the UCI includes the first information.

In an embodiment, the network device may transmit a UCI feedback resource configuration message (for example, an RRC configuration message) to the UE to configure the UCI feedback resource for the UE, and the UCI feedback resource configuration message may include one or more of a UCI feedback resource time-frequency position, an application scenario, a network device configuration, a model function, or a maximum feedback quantity of models.

After receiving the UCI feedback resource configuration message transmitted from the network device, the UE may feed back UCI over the configured UCI feedback resource based on the UCI feedback resource configuration message, where the UCI includes the corresponding model information.

For example, if the UCI feedback resource configuration message includes an application scenario, the UE may upload model information corresponding to the application scenario, and the model information of other application scenarios does not need to be uploaded, to reduce the amount of model information reported by the UE.

In some embodiments, receiving the first information transmitted from the UE includes:
transmitting an RRC request message to the UE, where the RRC request message includes one or more of an application scenario, a network device configuration, a model function, or a maximum feedback quantity of models; and
receiving an RRC response message transmitted from the UE, where the RRC response message includes the first information.

In an embodiment, the network device may transmit an RRC request message to the UE, for example, requesting the UE to report model information, where the RRC request message may include one or more of an application scenario, a network device configuration, a model function, or a maximum feedback quantity of models.

After receiving the RRC request message transmitted from the network device, the UE may feed back the corresponding model information through an uplink RRC message based on the RRC request message.

For example, if the RRC request message includes an application scenario, the UE may upload model information corresponding to the application scenario, and the model information of other application scenarios does not need to be uploaded, to reduce the amount of model information reported by the UE.

In some embodiments, receiving the first information transmitted from the UE includes:
transmitting a measurement configuration message to the UE, where the measurement configuration message includes one or more of a measurement configuration, an application scenario, a network device configuration, a model function, or a maximum feedback quantity of models; and
receiving an RRC signaling, a UCI signaling, or a signaling for transmitting data information transmitted from the UE, where the RRC signaling, the UCI signaling, or the signaling for transmitting data information includes the first information.

In an embodiment, the network device may transmit a measurement configuration message to the UE, where the measurement configuration message may include one or more of a measurement configuration (such as Tx beam configuration, reference signal configuration, etc.), an application scenario, a network device configuration, a model function, or a maximum feedback quantity of models.

After receiving the measurement configuration message transmitted from the network device, the UE may feed back the corresponding model information based on the measurement configuration message. In some embodiments, the UE may feed back information of one or more models using the RRC signaling, the UCI signaling, or signaling for transmitting data information.

For example, the UE may determine the application scenario or network device configuration based on the measurement configuration message, selects one or more models applicable to the current application scenario or network device configuration, and reports the information of the one or more models to the network device, to reduce the amount of model information reported by the UE.

In some embodiments, receiving the first information transmitted from the UE includes:
transmitting a model registration trigger message to the UE, where the model registration trigger message includes one or more of an application scenario, a network device configuration, a model function, or a maximum feedback quantity of models; and
receiving model registration information transmitted from the UE, where the model registration information includes the first information.

In an embodiment, the network device may transmit a model registration trigger message to the UE to trigger model registration, and the model registration trigger message may include one or more of an application scenario, a network device configuration, a model function, or a maximum feedback quantity of models.

After receiving the model registration trigger message transmitted from the network device, the UE may transmit model registration information to the network device based on the model registration trigger message, where the model registration information includes information of the corresponding model.

For example, if the model registration trigger message includes an application scenario, the UE may upload model information corresponding to the application scenario, and the model information of other application scenarios does not need to be uploaded, to reduce the amount of model information reported by the UE.

In some embodiments, after receiving the first information transmitted from the UE, the method further includes:
transmitting a radio resource control (RRC) configuration message to the UE based on the first information, where the RRC configuration message includes one or more model identifications.

In an embodiment, after receiving the first information reported by the UE, the network device may configure the model available to the UE through an RRC signaling (such as RRC configuration message) based on the model information reported by the UE, and the configuration information may include a model identification. After receiving the RRC configuration message transmitted from the network device, the UE may determine which model or models are used for downlink beam prediction.

For example, based on a current application scenario or network device configuration, the network device may select the model corresponding to the application scenario or network device configuration, and configure a model identification of the corresponding model to the UE.

In some embodiments, the network device may configure a set of models using the RRC signaling, and then activate one of the set of models through the MAC-CE for best beam prediction; or the RRC signaling only configures one model for best beam prediction; or the RRC signaling configures a set of models, and the UE selects one or more models from the set of models for best beam prediction.

In some embodiments, the method further includes:
transmitting a radio resource control (RRC) signaling or a media access control-control element (MAC-CE) to the UE, where the RRC signaling or the MAC-CE includes one or more of a model identification, an activation indication, a deactivation indication, or a fallback indication.

In an embodiment, the network device may select to activate one or more models based on the current application scenario or network device configuration, which may be activated through the RRC signaling or the MAC-CE. The activation signaling may include an identification of an activated model and an activation indication.

In one implementation, in case that performance of the model is not good (for example, compared with the performance of other models, or compared with the performance of legacy methods), the network device selects to switch to other models, or deactivate the model, or fallback to the legacy method, and may activate/deactivate/fallback through the RRC, or activate/deactivate/fallback through the MAC-CE.

The activation/deactivation signaling includes the identification of the activated/deactivated model, and the activation/deactivation indication; the fallback signaling includes the fallback indication. The activation/deactivation/fallback indication may be a 1-bit indication.

The methods provided in the embodiments of the present application are based on the same concept, and the implementation of each method may refer to each other. The same parts are not repeated.

The methods provided in the above embodiments of the present application are illustrated below by examples under specific application scenarios.

Embodiment 1: a user equipment (UE) reports model information through a UE Capability signaling.

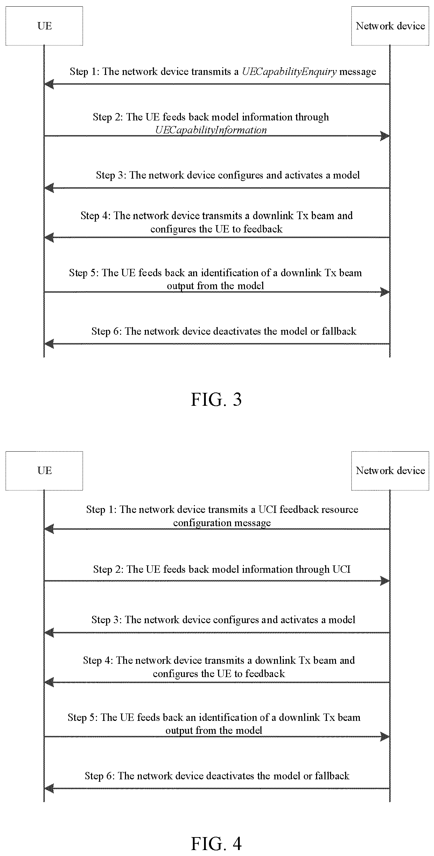

FIG. 3 is a first schematic diagram of implementing a method for model information reporting according to an embodiment of the present application. As shown in FIG. 3, the specific steps are as follows.

Step 1: A network device transmits a *UECapabilityEnquiry* message to query a user equipment (UE) for *UECapabilityInformation.*

The *UECapabilityEnquiry* message includes one or more of an application scenario, a network device configuration, a model function, or a maximum feedback quantity of models.

The application scenario includes: urban, rural, indoor, outdoor, highway, high-speed rail, Uma, Umi, etc.

The network device configuration includes: network device antenna configuration, beam configuration, reference signal configuration, etc.

The model function mainly includes: spatial-domain prediction, frequency-domain prediction, time-domain prediction, downlink beam pair prediction, downlink Tx beam prediction, downlink Rx beam prediction, etc.

The maximum feedback quantity of models refers to the maximum number of models that the UE may feed back. For example, the maximum feedback quantity of models is 6, that is, the UE may report information of at most 6 models.

Step 2: The UE feeds back the corresponding model information in the *UECapabilityInformation* based on the *UECapabilityEnquiry* message transmitted from the base station.

For example, the *UECapabilityEnquiry* message includes an application scenario, the UE may upload model information corresponding to the application scenario, and the model information of other application scenarios does not need to be uploaded, to reduce the amount of model information reported by the UE.

For the specific content of the model information fed back by the UE, the first information described in the above-mentioned method embodiments is referred.

Step 3: The network device configures a model available to the UE through radio resource control (RRC) based on the model information reported by the UE, and the configuration information includes the model ID.

The network device selects a corresponding model based on the model information reported by the UE, the current scenario and configuration, and configures the corresponding model to the UE.

For example, the network device selects the model corresponding to the application scenario or network device configuration based on the current application scenario or network device configuration.

The network device may configure a set of models using the RRC, and then activate one of the models through the MAC-CE for best beam prediction; or the RRC only configures one model for best beam prediction; or the RRC configures a set of models, and the UE selects one or more models from the set of models for best beam prediction.

Step 4: The network device configures an associated downlink reference signal based on the selected or activated model information, such as a quantity of Tx beams, a transmission sequence of Tx beams, a transmit pattern of Tx beams, etc., transmits Tx beams, and configures the feedback information for the UE based on a quantity of Tx beams output from the model.

Step 5: The UE feeds back the Tx beam output from the model based on the network device configuration. For example, the UE feeds back the best beam ID (optionally, adding RSRP feedback of the best beam), or feeds back the Top-N best beam IDs (optionally, adding RSRP feedback of the Top-N best beams), or feeds back N beam IDs (in which the best beam is included, and optionally, RSRP feedback of N beams is added).

Step 6: In case that performance of the model is not good (for example, compared with the performance of other models, or compared with the performance of legacy methods), the network device selects to switch to other models, or deactivate the model, or fallback to the legacy method, and may activate/deactivate/fallback through the RRC, or activate/deactivate/fallback through the MAC CE.

The activation/deactivation/fallback signaling includes an ID of the activated/deactivated model or a model sequence number (which may save bits), and a 1-bit activation/deactivation/fallback indication.

Embodiment 2: The UE transmits model information over the feedback resource through uplink control information (UCI).

FIG. 4 is a second schematic diagram of implementing a method for model information reporting according to an embodiment of the present application. As shown in FIG. 4, the specific steps are as follows.

Step 1: A network device transmits an uplink control information (UCI) feedback resource configuration message to configure a UCI feedback resource to a user equipment (UE).

The UCI feedback resource configuration message includes one or more of a UCI feedback resource time-frequency position, an application scenario, a network device configuration, a model function, or a maximum feedback quantity of models.

The application scenario includes: urban, rural, indoor, outdoor, highway, high-speed rail, Uma, Umi, etc.

The network device configuration includes: network device antenna configuration, beam configuration, reference signal configuration, etc.

The model function mainly includes: spatial-domain prediction, frequency-domain prediction, time-domain prediction, downlink beam pair prediction, downlink Tx beam prediction, downlink Rx beam prediction, etc.

The maximum feedback quantity of models refers to the maximum number of models that the UE may feed back. For example, the maximum feedback quantity of models is 6, that is, the UE may report information of at most 6 models.

Step 2: The UE feeds back UCI, including the corresponding model information, over the resource based on the UCI feedback resource configuration message transmitted from the network device.

For example, the UCI feedback resource configuration message includes an application scenario, the UE may upload model information corresponding to the application scenario, and the model information of other application scenarios does not need to be uploaded, to reduce the amount of model information reported by the UE.

For the specific content of the model information fed back by the UE, the first information described in the above-mentioned method embodiments is referred.

Steps 3 to 6 are the same as those in Embodiment 1.

Step 3: The network device configures a model available to the UE through radio resource control (RRC) based on the model information reported by the UE, and the configuration information includes the model ID.

Step 4: The network device configures an associated downlink reference signal based on the selected or activated model information, such as a quantity of Tx beams, a transmission sequence of Tx beams, a transmit pattern of Tx beams, etc., transmits Tx beams, and configures the feedback information for the UE based on a quantity of Tx beams output from the model.

Step 5: The UE feeds back the Tx beam output from the model based on the network device configuration. For example, the UE feeds back the best beam ID (optionally, adding RSRP feedback of the best beam), or feeds back the Top-N best beam IDs (optionally, adding RSRP feedback of the Top-N best beams), or feeds back N beam IDs (in which the best beam is included, and optionally, RSRP feedback of N beams is added).

Step 6: In case that performance of the model is not good (for example, compared with the performance of other models, or compared with the performance of legacy methods), the network device selects to switch to other models, or deactivate the model, or fallback to the legacy method, and may activate/deactivate/fallback through the RRC, or activate/deactivate/fallback through the MAC CE.

Embodiment 3: A user equipment (UE) feeds back model information through a radio resource control (RRC) signaling.

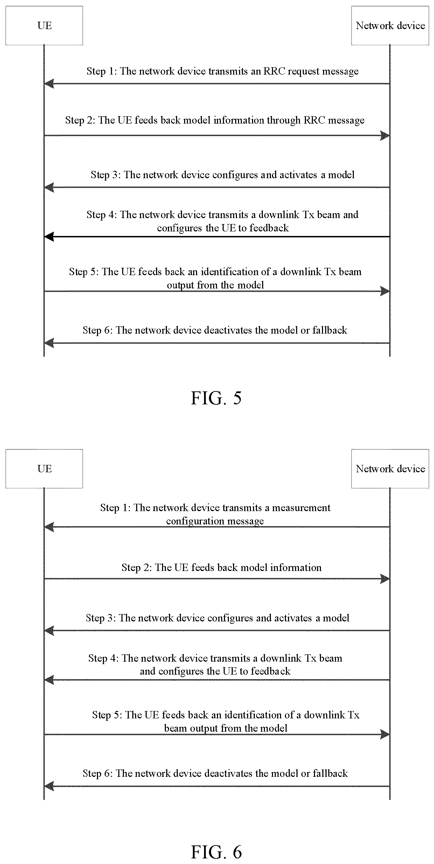

FIG. 5 is a third schematic diagram of implementing a method for model information reporting according to an embodiment of the present application. As shown in FIG. 5, the specific steps are as follows.

Step 1: A network device transmits an RRC request message to request the UE to report the model information.

The RRC request message includes: one or more of an application scenario, a network device configuration, a model function, or a maximum feedback quantity of models.

The application scenario includes: urban, rural, indoor, outdoor, highway, high-speed rail, Uma, Umi, etc.

The network device configuration includes: network device antenna configuration, beam configuration, reference signal configuration, etc.

The model function mainly includes: spatial-domain prediction, frequency-domain prediction, time-domain prediction, downlink beam pair prediction, downlink Tx beam prediction, downlink Rx beam prediction, etc.

The maximum feedback quantity of models refers to the maximum number of models that the UE may feed back. For example, the maximum feedback quantity of models is 6, that is, the UE may report information of at most 6 models.

Step 2: The UE feeds back the corresponding model information through the uplink RRC message based on the RRC request message transmitted from the network device.

For example, the RRC request message includes an application scenario, the UE may upload model information corresponding to the application scenario, and the model information of other application scenarios does not need to be uploaded, to reduce the amount of model information reported by the UE.

For the specific content of the model information fed back by the UE, the first information described in the above-mentioned method embodiments is referred.

Steps 3 to 6 are the same as those in Embodiment 1.

Step 3: The network device configures a model available to the UE through radio resource control (RRC) based on the model information reported by the UE, and the configuration information includes the model ID.

Step 4: The network device configures an associated downlink reference signal based on the selected or activated model information, such as a quantity of Tx beams, a transmission sequence of Tx beams, a transmit pattern of Tx beams, etc., transmits Tx beams, and configures the feedback information for the UE based on a quantity of Tx beams output from the model.

Step 5: The UE feeds back the Tx beam output from the model based on the network device configuration. For example, the UE feeds back the best beam ID (optionally, adding RSRP feedback of the best beam), or feeds back the Top-N best beam IDs (optionally, adding RSRP feedback of the Top-N best beams), or feeds back N beam IDs (in which the best beam is included, and optionally, RSRP feedback of N beams is added).

Step 6: In case that performance of the model is not good (for example, compared with the performance of other models, or compared with the performance of legacy methods), the network device selects to switch to other models, or deactivate the model, or fallback to the legacy method, and may activate/deactivate/fallback through the RRC, or activate/deactivate/fallback through the MAC CE.

Embodiment 4: A user equipment (UE) feeds back model information through a measurement configuration message.

FIG. 6 is a fourth schematic diagram of implementing a method for model information reporting according to an embodiment of the present application. As shown in FIG. 6, the specific steps are as follows.

Step 1: A network device transmits a measurement configuration message, including Tx beam configuration, reference signal configuration, etc.

Step 2: The UE feeds back the corresponding model information based on the measurement configuration message.

For example, the UE may determine the application scenario or network device configuration based on the measurement configuration message, selects one or more models applicable to the current application scenario or network device configuration, and reports model information to the network device, to reduce the amount of model information reported by the UE.

For the specific content of the model information fed back by the UE, the first information described in the above-mentioned method embodiments is referred.

In an embodiment, an RRC signaling, a UCI signaling, and a signaling for transmitting data information may be used to feedback the one or more models.

### Steps 3 to 6 are the same as those in Embodiment 1.

Step 3: The network device configures a model available to the UE through radio resource control (RRC) based on the model information reported by the UE, and the configuration information includes the model ID.

Step 4: The network device configures an associated downlink reference signal based on the selected or activated model information, such as a quantity of Tx beams, a transmission sequence of Tx beams, a transmit pattern of Tx beams, etc., transmits Tx beams, and configures the feedback information for the UE based on a quantity of Tx beams output from the model.

Step 5: The UE feeds back the Tx beam output from the model based on the network device configuration. For example, the UE feeds back the best beam ID (optionally, adding RSRP feedback of the best beam), or feeds back the Top-N best beam IDs (optionally, adding RSRP feedback of the Top-N best beams), or feeds back N beam IDs (in which the best beam is included, and optionally, RSRP feedback of N beams is added).

Step 6: In case that performance of the model is not good (for example, compared with the performance of other models, or compared with the performance of legacy methods), the network device selects to switch to other models, or deactivate the model, or fallback to the legacy method, and may activate/deactivate/fallback through the RRC, or activate/deactivate/fallback through the MAC CE.

Embodiment 5: A user equipment (UE) feeds back model information through a signaling for model registration.

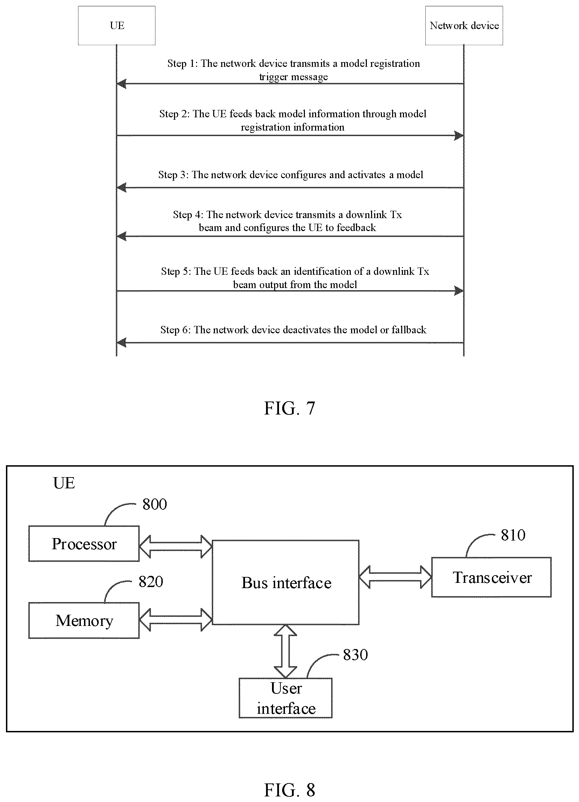

FIG. 7 is a fifth schematic diagram of implementing a method for model information reporting according to an embodiment of the present application. As shown in FIG. 7, the specific steps are as follows.

Step 1: A network device transmits a model registration trigger message to trigger a UE to register a model.

The model registration trigger message includes: one or more of an application scenario, a network device configuration, a model function, or a maximum feedback quantity of models.

The application scenario includes: urban, rural, indoor, outdoor, highway, high-speed rail, Uma, Umi, etc.

The network device configuration includes: network device antenna configuration, beam configuration, reference signal configuration, etc.

The model function mainly includes: spatial-domain prediction, frequency-domain prediction, time-domain prediction, downlink beam pair prediction, downlink Tx beam prediction, downlink Rx beam prediction, etc.

The maximum feedback quantity of models refers to the maximum number of models that the UE may feed back. For example, the maximum feedback quantity of models is 6, that is, the UE may report information of at most 6 models.

Step 2: The UE feeds back the corresponding model information through model registration information based on the model registration trigger message transmitted from the network device.

For example, the model registration trigger message includes an application scenario, the UE may upload model information corresponding to the application scenario, and the model information of other application scenarios does not need to be uploaded, to reduce the amount of model information reported by the UE.

For the specific content of the model information fed back by the UE, the first information described in the above-mentioned method embodiments is referred.

Steps 3 to 6 are the same as those in Embodiment 1.

Step 3: The network device configures a model available to the UE through radio resource control (RRC) based on the model information reported by the UE, and the configuration information includes the model ID.

Step 4: The network device configures an associated downlink reference signal based on the selected or activated model information, such as a quantity of Tx beams, a transmission sequence of Tx beams, a transmit pattern of Tx beams, etc., transmits Tx beams, and configures the feedback information for the UE based on a quantity of Tx beams output from the model.

Step 5: The UE feeds back the Tx beam output from the model based on the network device configuration. For example, the UE feeds back the best beam ID (optionally, adding RSRP feedback of the best beam), or feeds back the Top-N best beam IDs (optionally, adding RSRP feedback of the Top-N best beams), or feeds back N beam IDs (in which the best beam is included, and optionally, RSRP feedback of N beams is added).

Step 6: In case that performance of the model is not good (for example, compared with the performance of other models, or compared with the performance of legacy methods), the network device selects to switch to other models, or deactivate the model, or fallback to the legacy method, and may activate/deactivate/fallback through the RRC, or activate/deactivate/fallback through the MAC CE.

The methods and the devices provided in the embodiments of the present application are based on the same concept, and since the principles of the methods and the devices to solve the problem are similar, the implementation of the devices and the methods may be referred to each other, and the details are not repeated.

FIG. 8 is a schematic structural diagram of a user equipment (UE) according to an embodiment of the present application. As shown in FIG. 8, the UE includes a memory 820, a transceiver 810, and a processor 800, where the processor 800 and the memory 820 may also be arranged physically separately.

The memory 820 is used for storing a computer program, the transceiver 810 is used for receiving and transmitting data under control of the processor 800.

The transceiver 810 is used for receiving and transmitting data under control of the processor 800.

In FIG. 8, a bus architecture may include any number of interconnected buses and bridges, which are linked together through various circuits of one or more processors represented by the processor 800 and one or more memories represented by the memory 820. The bus architecture may also link together various other circuits, such as peripherals, voltage regulators, and power management circuits, which are well known in the art, and therefore are not further described in the present application. The bus interface provides an interface. The transceiver 810 may include multiple elements, i.e., include a transmitter and a receiver, units for providing communication with various other devices over transmission media including wireless channels, wired channels, fiber optic cables, and the like. For different user equipment, a user interface 830 may be an interface capable of externally or internally connecting the required device, and the connected device includes, but not limited to, a keypad, a display, a speaker, a microphone, a joystick, and the like.

The processor 800 is responsible for managing the bus architecture and general processing, and the memory 820 may store data used by the processor 800 when performing operations.

The processor 800 may be a central processing unit (CPU), an application specific integrated circuit (ASIC), a field-programmable gate array (FPGA), or a complex programmable logic device (CPLD), the processor may also use a multi-core architecture.

The processor 800 is used to perform any of the methods performed by the UE provided in the embodiments of the present application when executing the executable instructions by calling the computer program stored in the memory 820, for example: determining first information, where the first information is used to indicate one or more artificial intelligence (AI) or machine learning (ML) models, and the one or more AI/ML models are used for downlink beam prediction; and transmitting the first information to a network device.

In some embodiments, the first information includes one or more of the following:
a model identification;
an application scenario of a model;
a network device configuration applicable to a model;
a model function;
a quantity of input beams of a model;
a quantity of output beams of a model;
a type of a downlink reference signal (RS) applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

In some embodiments, transmitting the first information to the network device includes:
transmitting a first signaling to the network device, where the first signaling includes the first information;
the first signaling includes one or more of the following:
   a UE capability signaling;
   an uplink control information (UCI) signaling;
   a radio resource control (RRC) signaling;
   a signaling for transmitting data information; or
   a signaling for model registration.

In some embodiments, transmitting the first information to the network device includes:
receiving a *UECapabilityEnquiry* message transmitted from the network device, where the *UECapabilityEnquiry* message includes one or more of an application scenario, a network device configuration, a model function, or a maximum feedback quantity of models; and
transmitting *UECapabilityInformation* to the network device based on the *UECapabilityEnquiry* message, where the *UECapabilityInformation* includes the first information.

In some embodiments, transmitting the first information to the network device includes:
receiving a UCI feedback resource configuration message transmitted from the network device, where the UCI feedback resource configuration message includes one or more of a UCI feedback resource time-frequency position, an application scenario, a network device configuration, a model function, or a maximum feedback quantity of models; and
transmitting UCI to the network device based on the UCI feedback resource configuration message, where the UCI includes the first information.

In some embodiments, transmitting the first information to the network device includes:
receiving an RRC request message transmitted from the network device, where the RRC request message includes one or more of an application scenario, a network device configuration, a model function, or a maximum feedback quantity of models; and
transmitting an RRC response message to the network device based on the RRC request message, where the RRC response message includes the first information.

In some embodiments, transmitting the first information to the network device includes:
receiving a measurement configuration message transmitted from the network device, where the measurement configuration message includes one or more of a measurement configuration, an application scenario, a network device configuration, a model function, or a maximum feedback quantity of models; and
transmitting an RRC signaling, a UCI signaling, or a signaling for transmitting data information to the network device based on the measurement configuration message, where the RRC signaling, the UCI signaling, or the signaling for transmitting data information includes the first information.

In some embodiments, transmitting the first information to the network device includes:
receiving a model registration trigger message transmitted from the network device, where the model registration trigger message includes one or more of an application scenario, a network device configuration, a model function, or a maximum feedback quantity of models; and
transmitting model registration information to the network device based on the model registration trigger message, where the model registration information includes the first information.

In some embodiments, after transmitting the first information to the network device, the method further includes:
receiving a radio resource control (RRC) configuration message transmitted from the network device, where the RRC configuration message includes one or more model identifications; and
determining an AI/ML model for downlink beam prediction based on the RRC configuration message.

In some embodiments, the method further includes:
receiving a radio resource control (RRC) signaling or a media access control-control element (MAC-CE) transmitted from the network device, where the RRC signaling or the MAC-CE includes one or more of a model identification, an activation indication, a deactivation indication, or a fallback indication; and
performing model activation or deactivation or fallback operations based on the RRC signaling or the MAC-CE.

In some embodiments, after transmitting the first information to the network device, the method further includes:
receiving a model identification assignment message transmitted from the network device, where the model identification assignment message includes a model identification assigned by the network device; and
associating the model identification assigned by the network device with a model indicated by the first information based on the model identification assignment message.

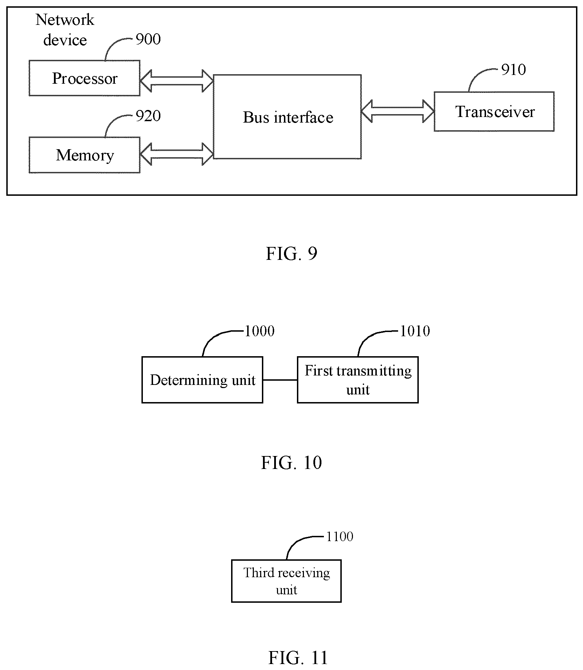

FIG. 9 is a schematic structural diagram of a network device according to an embodiment of the present application. As shown in FIG. 9, the network device includes a memory 920, a transceiver 910, and a processor 900, where the processor 900 and the memory 920 may also be arranged physically separately.

The memory 920 is used for storing a computer program, the transceiver 910 is used for receiving and transmitting data under control of the processor 900.

The transceiver 910 is used for receiving and transmitting data under control of the processor 900.

In FIG. 9, a bus architecture may include any number of interconnected buses and bridges, which are linked together through various circuits of one or more processors represented by the processor 900 and one or more memories represented by the memory 920. The bus architecture may also link together various other circuits, such as peripherals, voltage regulators, and power management circuits, which are well known in the art, and therefore are not further described in the present application. The bus interface provides an interface. The transceiver 910 may include multiple elements, i.e., include a transmitter and a receiver, units for providing communication with various other devices over transmission media including wireless channels, wired channels, fiber optic cables, and the like.

The processor 900 is responsible for managing the bus architecture and general processing, and the memory 920 may store data used by the processor 900 when performing operations.

The processor 900 may be a CPU, ASIC, FPGA or CPLD, and the processor may also use a multi-core architecture.

The processor 900 is used to perform any of the methods performed by the network device provided in the embodiments of the present application when executing the executable instructions by calling the computer program stored in the memory 920, for example: receiving first information transmitted from a user equipment (UE), where the first information is used to indicate one or more artificial intelligence (AI) or machine learning (ML) models, and the one or more AI/ML models are used for downlink beam prediction.

In some embodiments, the first information includes one or more of the following:
a model identification;
an application scenario of a model;
a network device configuration applicable to a model;
a model function;
a quantity of input beams of a model;
a quantity of output beams of a model;
a type of a downlink reference signal (RS) applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

In some embodiments, receiving the first information transmitted from the UE includes:
receiving a first signaling transmitted from the UE, where the first signaling includes the first information;
the first signaling includes one or more of the following:
   a UE capability signaling;
   an uplink control information (UCI) signaling;
   a radio resource control (RRC) signaling;
   a signaling for transmitting data information; or
   a signaling for model registration.

In some embodiments, receiving the first information transmitted from the UE includes:
transmitting a *UECapabilityEnquiry* message to the UE, where the *UECapabilityEnquiry* message includes one or more of an application scenario, a network device configuration, a model function, or a maximum feedback quantity of models; and
receiving *UECapabilityInformation* transmitted from the UE, where the *UECapabilityInformation* includes the first information.

In some embodiments, receiving the first information transmitted from the UE includes:
transmitting a UCI feedback resource configuration message to the UE, where the UCI feedback resource configuration message includes one or more of a UCI feedback resource time-frequency position, an application scenario, a network device configuration, a model function, or a maximum feedback quantity of models; and
receiving UCI transmitted from the UE, where the UCI includes the first information.

In some embodiments, receiving the first information transmitted from the UE includes:
transmitting an RRC request message to the UE, where the RRC request message includes one or more of an application scenario, a network device configuration, a model function, or a maximum feedback quantity of models; and
receiving an RRC response message transmitted from the UE, where the RRC response message includes the first information.

In some embodiments, receiving the first information transmitted from the UE includes:
transmitting a measurement configuration message to the UE, where the measurement configuration message includes one or more of a measurement configuration, an application scenario, a network device configuration, a model function, or a maximum feedback quantity of models; and
receiving an RRC signaling, a UCI signaling, or a signaling for transmitting data information transmitted from the UE, where the RRC signaling, the UCI signaling, or the signaling for transmitting data information includes the first information.

In some embodiments, receiving the first information transmitted from the UE includes:
transmitting a model registration trigger message to the UE, where the model registration trigger message includes one or more of an application scenario, a network device configuration, a model function, or a maximum feedback quantity of models; and
receiving model registration information transmitted from the UE, where the model registration information includes the first information.

In some embodiments, after receiving the first information transmitted from the UE, the method further includes:
transmitting a radio resource control (RRC) configuration message to the UE based on the first information, where the RRC configuration message includes one or more model identifications.

In some embodiments, the method further includes:
transmitting a radio resource control (RRC) signaling or a media access control-control element (MAC-CE) to the UE, where the RRC signaling or the MAC-CE includes one or more of a model identification, an activation indication, a deactivation indication, or a fallback indication.

In some embodiments, after receiving the first information transmitted from the UE, the method further includes:
transmitting a model identification assignment message to the UE based on the first information, where the model identification assignment message includes a model identification assigned by the network device.

It should be noted here that the above-mentioned UE and the network device according to the embodiments of the present application may implement all the method steps implemented by the above-mentioned method embodiments, and may achieve the same effect. The same parts and beneficial effects as the same method embodiments are not repeated here.

FIG. 10 is a first schematic structural diagram of an apparatus for model information reporting according to an embodiment of the present application. As shown in FIG. 10, the apparatus for model information reporting includes:
a determining unit 1000, used for determining first information, where the first information is used to indicate one or more artificial intelligence (AI) or machine learning (ML) models, and the one or more AI/ML models are used for downlink beam prediction; and
a first transmitting unit 1010, used for transmitting the first information to a network device.

In some embodiments, the first information includes one or more of the following:
a model identification;
an application scenario of a model;
a network device configuration applicable to a model;
a model function;
a quantity of input beams of a model;
a quantity of output beams of a model;
a type of a downlink reference signal (RS) applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

In some embodiments, transmitting the first information to the network device includes:
transmitting a first signaling to the network device, where the first signaling includes the first information;
the first signaling includes one or more of the following:
   a UE capability signaling;
   an uplink control information (UCI) signaling;
   a radio resource control (RRC) signaling;
   a signaling for transmitting data information; or
   a signaling for model registration.

In some embodiments, transmitting the first information to the network device includes:
receiving a *UECapabilityEnquiry* message transmitted from the network device, where the *UECapabilityEnquiry* message includes one or more of an application scenario, a network device configuration, a model function, or a maximum feedback quantity of models; and
transmitting *UECapabilityInformation* to the network device based on the *UECapabilityEnquiry* message, where the *UECapabilityInformation* includes the first information.

In some embodiments, transmitting the first information to the network device includes:
receiving a UCI feedback resource configuration message transmitted from the network device, where the UCI feedback resource configuration message includes one or more of a UCI feedback resource time-frequency position, an application scenario, a network device configuration, a model function, or a maximum feedback quantity of models; and
transmitting UCI to the network device based on the UCI feedback resource configuration message, where the UCI includes the first information.

In some embodiments, transmitting the first information to the network device includes:
receiving an RRC request message transmitted from the network device, where the RRC request message includes one or more of an application scenario, a network device configuration, a model function, or a maximum feedback quantity of models; and
transmitting an RRC response message to the network device based on the RRC request message, where the RRC response message includes the first information.

In some embodiments, transmitting the first information to the network device includes:
receiving a measurement configuration message transmitted from the network device, where the measurement configuration message includes one or more of a measurement configuration, an application scenario, a network device configuration, a model function, or a maximum feedback quantity of models; and
transmitting an RRC signaling, a UCI signaling, or a signaling for transmitting data information to the network device based on the measurement configuration message, where the RRC signaling, the UCI signaling, or the signaling for transmitting data information includes the first information.

In some embodiments, transmitting the first information to the network device includes:
receiving a model registration trigger message transmitted from the network device, where the model registration trigger message includes one or more of an application scenario, a network device configuration, a model function, or a maximum feedback quantity of models; and
transmitting model registration information to the network device based on the model registration trigger message, where the model registration information includes the first information.

In some embodiments, the apparatus further includes a first receiving unit, used for:
receiving a radio resource control (RRC) configuration message transmitted from the network device, where the RRC configuration message includes one or more model identifications; and
determining an AI/ML model for downlink beam prediction based on the RRC configuration message.

In some embodiments, the apparatus further includes a second receiving unit, used for:
receiving a radio resource control (RRC) signaling or a media access control-control element (MAC-CE) transmitted from the network device, where the RRC signaling or the MAC-CE includes one or more of a model identification, an activation indication, a deactivation indication, or a fallback indication; and
performing model activation or deactivation or fallback operations based on the RRC signaling or the MAC-CE.

In some embodiments, the apparatus further includes an associating unit, used for:
receiving a model identification assignment message transmitted from the network device, where the model identification assignment message includes a model identification assigned by the network device; and
associating the model identification assigned by the network device with a model indicated by the first information based on the model identification assignment message.

FIG. 11 is a second schematic structural diagram of an apparatus for model information reporting according to an embodiment of the present application. As shown in FIG. 11, the apparatus for model information reporting includes:
a third receiving unit 1100, used for receiving first information transmitted from a user equipment (UE), where the first information is used to indicate one or more artificial intelligence (AI) or machine learning (ML) models, and the one or more AI/ML models are used for downlink beam prediction.

In some embodiments, the first information includes one or more of the following:
a model identification;
an application scenario of a model;
a network device configuration applicable to a model;
a model function;
a quantity of input beams of a model;
a quantity of output beams of a model;
a type of a downlink reference signal (RS) applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

In some embodiments, the model identification includes one or more of the following:
a sequence number or a serial number of a model;
a dataset identification for model training;
an RS configuration identification for model training;
a beam description information identification for model training; or
information on a quantity of input beams and a quantity of output beams of a model.

In some embodiments, receiving the first information transmitted from the UE includes:
receiving a first signaling transmitted from the UE, where the first signaling includes the first information;
the first signaling includes one or more of the following:
   a UE capability signaling;
   an uplink control information (UCI) signaling;
   a radio resource control (RRC) signaling;
   a signaling for transmitting data information; or
   a signaling for model registration.

In some embodiments, receiving the first information transmitted from the UE includes:
transmitting a *UECapabilityEnquiry* message to the UE, where the *UECapabilityEnquiry* message includes one or more of an application scenario, a network device configuration, a model function, or a maximum feedback quantity of models; and
receiving *UECapabilityInformation* transmitted from the UE, where the *UECapabilityInformation* includes the first information.

In some embodiments, receiving the first information transmitted from the UE includes:
transmitting a UCI feedback resource configuration message to the UE, where the UCI feedback resource configuration message includes one or more of a UCI feedback resource time-frequency position, an application scenario, a network device configuration, a model function, or a maximum feedback quantity of models; and
receiving UCI transmitted from the UE, where the UCI includes the first information.

In some embodiments, receiving the first information transmitted from the UE includes:
transmitting an RRC request message to the UE, where the RRC request message includes one or more of an application scenario, a network device configuration, a model function, or a maximum feedback quantity of models; and
receiving an RRC response message transmitted from the UE, where the RRC response message includes the first information.

In some embodiments, receiving the first information transmitted from the UE includes:
transmitting a measurement configuration message to the UE, where the measurement configuration message includes one or more of a measurement configuration, an application scenario, a network device configuration, a model function, or a maximum feedback quantity of models; and
receiving an RRC signaling, a UCI signaling, or a signaling for transmitting data information transmitted from the UE, where the RRC signaling, the UCI signaling, or the signaling for transmitting data information includes the first information.

In some embodiments, receiving the first information transmitted from the UE includes:
transmitting a model registration trigger message to the UE, where the model registration trigger message includes one or more of an application scenario, a network device configuration, a model function, or a maximum feedback quantity of models; and
receiving model registration information transmitted from the UE, where the model registration information includes the first information.

In some embodiments, the apparatus further includes:
a second transmitting unit, used for transmitting a radio resource control (RRC) configuration message to the UE based on the first information, where the RRC configuration message includes one or more model identifications.

In some embodiments, the apparatus further includes:
a third transmitting unit, used for transmitting a radio resource control (RRC) signaling or a media access control-control element (MAC-CE) to the UE, where the RRC signaling or the MAC-CE includes one or more of a model identification, an activation indication, a deactivation indication, or a fallback indication.

In some embodiments, the apparatus further includes an assigning unit, used for:
transmitting a model identification assignment message to the UE based on the first information, where the model identification assignment message includes a model identification assigned by the network device.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the solutions of the present application in essence or a part of the technical solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

It should be noted here that the above-mentioned apparatus according to the embodiments of the present application may implement all the method steps implemented by the above-mentioned method embodiments, and may achieve the same effect. The same parts and beneficial effects as the same method embodiments are not repeated here.

An embodiment of the present application further provides a computer-readable storage medium storing a computer program, where the computer program causes a computer to perform any of the methods for model information reporting described above.

It should be noted here that the above-mentioned computer-readable storage medium according to the embodiments of the present application may implement all the method steps implemented by the above-mentioned method embodiments, and may achieve the same effect. The same parts and beneficial effects as the same method embodiments are not repeated here.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A wireless terminal device may communicate with one or more core networks (CN) via a radio access network (RAN), and the wireless terminal device may be a mobile terminal device, such as a mobile phone (or referred to as cellular phone) and a computer with mobile terminal device, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for model information reporting, performed by a user equipment, UE, comprising:
determining first information, wherein the first information is used to indicate one or more artificial intelligence, AI, or machine learning, ML, models, and the one or more AI/ML models are used for downlink beam prediction; and
transmitting the first information to a network device.

2. The method of claim 1, wherein the first information comprises one or more of the following:
a model identification;
an application scenario of a model;
a network device configuration applicable to a model;
a model function;
a quantity of input beams of a model;
a quantity of output beams of a model;
a type of a downlink reference signal, RS, applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

3. The method of claim 2, wherein the model identification comprises one or more of the following:
a sequence number or a serial number of a model;
a dataset identification for model training;
an RS configuration identification for model training;
a beam description information identification for model training; or
information on a quantity of input beams and a quantity of output beams of a model.

4. The method of any of claims 1 to 3, wherein transmitting the first information to the network device comprises:
transmitting a first signaling to the network device, wherein the first signaling comprises the first information;
wherein the first signaling comprises one or more of the following:
a UE capability signaling;
an uplink control information, UCI, signaling;
a radio resource control, RRC, signaling;
a signaling for transmitting data information; or
a signaling for model registration.

5. The method of claim 4, wherein transmitting the first information to the network device comprises:
receiving a *UECapabilityEnquiry* message transmitted from the network device, wherein the *UECapabilityEnquiry* message comprises one or more of an application scenario, a network device configuration, a model function, or a maximum feedback quantity of models; and
transmitting *UECapabilityInformation* to the network device based on the *UECapabilityEnquiry* message, wherein the *UECapabilityInformation* comprises the first information.

6. The method of claim 4, wherein transmitting the first information to the network device comprises:
receiving a UCI feedback resource configuration message transmitted from the network device, wherein the UCI feedback resource configuration message comprises one or more of a UCI feedback resource time-frequency position, an application scenario, a network device configuration, a model function, or a maximum feedback quantity of models; and
transmitting UCI to the network device based on the UCI feedback resource configuration message, wherein the UCI comprises the first information.

7. The method of claim 4, wherein transmitting the first information to the network device comprises:
receiving an RRC request message transmitted from the network device, wherein the RRC request message comprises one or more of an application scenario, a network device configuration, a model function, or a maximum feedback quantity of models; and
transmitting an RRC response message to the network device based on the RRC request message, wherein the RRC response message comprises the first information.

8. The method of claim 4, wherein transmitting the first information to the network device comprises:
receiving a measurement configuration message transmitted from the network device, wherein the measurement configuration message comprises one or more of a measurement configuration, an application scenario, a network device configuration, a model function, or a maximum feedback quantity of models; and
transmitting an RRC signaling, a UCI signaling, or a signaling for transmitting data information to the network device based on the measurement configuration message, wherein the RRC signaling, the UCI signaling, or the signaling for transmitting data information comprises the first information.

9. The method of claim 4, wherein transmitting the first information to the network device comprises:
receiving a model registration trigger message transmitted from the network device, wherein the model registration trigger message comprises one or more of an application scenario, a network device configuration, a model function, or a maximum feedback quantity of models; and
transmitting model registration information to the network device based on the model registration trigger message, wherein the model registration information comprises the first information.

10. The method of claim 1 or 2, wherein after transmitting the first information to the network device, the method further comprises:
receiving a radio resource control, RRC, configuration message transmitted from the network device, wherein the RRC configuration message comprises one or more model identifications; and
determining an AI/ML model for downlink beam prediction based on the RRC configuration message.

11. The method of claim 1 or 2, further comprising:
receiving a radio resource control, RRC, signaling or a media access control-control element, MAC-CE, transmitted from the network device, wherein the RRC signaling or the MAC-CE comprises one or more of a model identification, an activation indication, a deactivation indication, or a fallback indication; and
performing model activation or deactivation or fallback operations based on the RRC signaling or the MAC-CE.

12. The method of claim 1 or 2, wherein after transmitting the first information to the network device, the method further comprises:
receiving a model identification assignment message transmitted from the network device, wherein the model identification assignment message comprises a model identification assigned by the network device; and
associating the model identification assigned by the network device with a model indicated by the first information based on the model identification assignment message.

13. A method for model information reporting, performed by a network device, comprising:
receiving first information transmitted from a user equipment, UE, wherein the first information is used to indicate one or more artificial intelligence, AI, or machine learning, ML, models, and the one or more AI/ML models are used for downlink beam prediction.

14. The method of claim 13, wherein the first information comprises one or more of the following:
a model identification;
an application scenario of a model;
a network device configuration applicable to a model;
a model function;
a quantity of input beams of a model;
a quantity of output beams of a model;
a type of a downlink reference signal, RS, applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

15. The method of claim 14, wherein the model identification comprises one or more of the following:
a sequence number or a serial number of a model;
a dataset identification for model training;
an RS configuration identification for model training;
a beam description information identification for model training; or
information on a quantity of input beams and a quantity of output beams of a model.

16. The method of any of claims 13 to 15, wherein receiving the first information transmitted from the UE comprises:
receiving a first signaling transmitted from the UE, wherein the first signaling comprises the first information;
wherein the first signaling comprises one or more of the following:
a UE capability signaling;
an uplink control information, UCI, signaling;
a radio resource control, RRC, signaling;
a signaling for transmitting data information; or
a signaling for model registration.

17. The method of claim 16, wherein receiving the first information transmitted from the UE comprises:
transmitting a *UECapabilityEnquiry* message to the UE, wherein the *UECapabilityEnquiry* message comprises one or more of an application scenario, a network device configuration, a model function, or a maximum feedback quantity of models; and
receiving *UECapabilityInformation* transmitted from the UE, wherein the *UECapabilityInformation* comprises the first information.

18. The method of claim 16, wherein receiving the first information transmitted from the UE comprises:
transmitting a UCI feedback resource configuration message to the UE, wherein the UCI feedback resource configuration message comprises one or more of a UCI feedback resource time-frequency position, an application scenario, a network device configuration, a model function, or a maximum feedback quantity of models; and
receiving UCI transmitted from the UE, wherein the UCI comprises the first information.

19. The method of claim 16, wherein receiving the first information transmitted from the UE comprises:
transmitting an RRC request message to the UE, wherein the RRC request message comprises one or more of an application scenario, a network device configuration, a model function, or a maximum feedback quantity of models; and
receiving an RRC response message transmitted from the UE, wherein the RRC response message comprises the first information.

20. The method of claim 16, wherein receiving the first information transmitted from the UE comprises:
transmitting a measurement configuration message to the UE, wherein the measurement configuration message comprises one or more of a measurement configuration, an application scenario, a network device configuration, a model function, or a maximum feedback quantity of models; and
receiving an RRC signaling, a UCI signaling, or a signaling for transmitting data information transmitted from the UE, wherein the RRC signaling, the UCI signaling, or the signaling for transmitting data information comprises the first information.

21. The method of claim 16, wherein receiving the first information transmitted from the UE comprises:
transmitting a model registration trigger message to the UE, wherein the model registration trigger message comprises one or more of an application scenario, a network device configuration, a model function, or a maximum feedback quantity of models; and
receiving model registration information transmitted from the UE, wherein the model registration information comprises the first information.

22. The method of claim 13 or 14, wherein after receiving the first information transmitted from the UE, the method further comprises:
transmitting a radio resource control, RRC, configuration message to the UE based on the first information, wherein the RRC configuration message comprises one or more model identifications.

23. The method of claim 13 or 14, further comprising:
transmitting a radio resource control, RRC, signaling or a media access control-control element, MAC-CE, to the UE, wherein the RRC signaling or the MAC-CE comprises one or more of a model identification, an activation indication, a deactivation indication, or a fallback indication.

24. The method of claim 13 or 14, wherein after receiving the first information transmitted from the UE, the method further comprises:
transmitting a model identification assignment message to the UE based on the first information, wherein the model identification assignment message comprises a model identification assigned by the network device.

25. A user equipment, UE, comprising a memory, a transceiver and a processor,
wherein the memory is used for storing a computer program, the transceiver is used for receiving and transmitting data under control of the processor and the processor is used for reading the computer program in the memory and performing the following operations:
determining first information, wherein the first information is used to indicate one or more artificial intelligence, AI, or machine learning, ML, models, and the one or more AI/ML models are used for downlink beam prediction; and
transmitting the first information to a network device.

26. The UE of claim 25, wherein the first information comprises one or more of the following:
a model identification;
an application scenario of a model;
a network device configuration applicable to a model;
a model function;
a quantity of input beams of a model;
a quantity of output beams of a model;
a type of a downlink reference signal, RS, applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

27. The UE of claim 26, wherein the model identification comprises one or more of the following:
a sequence number or a serial number of a model;
a dataset identification for model training;
an RS configuration identification for model training;
a beam description information identification for model training; or
information on a quantity of input beams and a quantity of output beams of a model.

28. The UE of any of claims 25 to 27, wherein transmitting the first information to the network device comprises:
transmitting a first signaling to the network device, wherein the first signaling comprises the first information;
wherein the first signaling comprises one or more of the following:
a UE capability signaling;
an uplink control information, UCI, signaling;
a radio resource control, RRC, signaling;
a signaling for transmitting data information; or
a signaling for model registration.

29. The UE of claim 28, wherein transmitting the first information to the network device comprises:
receiving a *UECapabilityEnquiry* message transmitted from the network device, wherein the *UECapabilityEnquiry* message comprises one or more of an application scenario, a network device configuration, a model function, or a maximum feedback quantity of models; and
transmitting *UECapabilityInformation* to the network device based on the *UECapabilityEnquiry* message, wherein the *UECapabilityInformation* comprises the first information.

30. The UE of claim 28, wherein transmitting the first information to the network device comprises:
receiving a UCI feedback resource configuration message transmitted from the network device, wherein the UCI feedback resource configuration message comprises one or more of a UCI feedback resource time-frequency position, an application scenario, a network device configuration, a model function, or a maximum feedback quantity of models; and
transmitting UCI to the network device based on the UCI feedback resource configuration message, wherein the UCI comprises the first information.

31. The UE of claim 28, wherein transmitting the first information to the network device comprises:
receiving an RRC request message transmitted from the network device, wherein the RRC request message comprises one or more of an application scenario, a network device configuration, a model function, or a maximum feedback quantity of models; and
transmitting an RRC response message to the network device based on the RRC request message, wherein the RRC response message comprises the first information.

32. The UE of claim 28, wherein transmitting the first information to the network device comprises:
receiving a measurement configuration message transmitted from the network device, wherein the measurement configuration message comprises one or more of a measurement configuration, an application scenario, a network device configuration, a model function, or a maximum feedback quantity of models; and
transmitting an RRC signaling, a UCI signaling, or a signaling for transmitting data information to the network device based on the measurement configuration message, wherein the RRC signaling, the UCI signaling, or the signaling for transmitting data information comprises the first information.

33. The UE of claim 28, wherein transmitting the first information to the network device comprises:
receiving a model registration trigger message transmitted from the network device, wherein the model registration trigger message comprises one or more of an application scenario, a network device configuration, a model function, or a maximum feedback quantity of models; and
transmitting model registration information to the network device based on the model registration trigger message, wherein the model registration information comprises the first information.

34. The UE of claim 25 or 26, wherein after transmitting the first information to the network device, the operations further comprise:
receiving a radio resource control, RRC, configuration message transmitted from the network device, wherein the RRC configuration message comprises one or more model identifications; and
determining an AI/ML model for downlink beam prediction based on the RRC configuration message.

35. The UE of claim 25 or 26, wherein the operations further comprise:
receiving a radio resource control, RRC, signaling or a media access control-control element, MAC-CE, transmitted from the network device, wherein the RRC signaling or the MAC-CE comprises one or more of a model identification, an activation indication, a deactivation indication, or a fallback indication; and
performing model activation or deactivation or fallback operations based on the RRC signaling or the MAC-CE.

36. The UE of claim 25 or 26, wherein after transmitting the first information to the network device, the operations further comprise:
receiving a model identification assignment message transmitted from the network device, wherein the model identification assignment message comprises a model identification assigned by the network device; and
associating the model identification assigned by the network device with a model indicated by the first information based on the model identification assignment message.

37. A network device, comprising a memory, a transceiver and a processor,
wherein the memory is used for storing a computer program, the transceiver is used for receiving and transmitting data under control of the processor and the processor is used for reading the computer program in the memory and performing the following operations:
receiving first information transmitted from a user equipment, UE, wherein the first information is used to indicate one or more artificial intelligence, AI, or machine learning, ML, models, and the one or more AI/ML models are used for downlink beam prediction.

38. The network device of claim 37, wherein the first information comprises one or more of the following:
a model identification;
an application scenario of a model;
a network device configuration applicable to a model;
a model function;
a quantity of input beams of a model;
a quantity of output beams of a model;
a type of a downlink reference signal, RS, applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

39. The network device of claim 38, wherein the model identification comprises one or more of the following:
a sequence number or a serial number of a model;
a dataset identification for model training;
an RS configuration identification for model training;
a beam description information identification for model training; or
information on a quantity of input beams and a quantity of output beams of a model.

40. The network device of any of claims 37 to 39, wherein receiving the first information transmitted from the UE comprises:
receiving a first signaling transmitted from the UE, wherein the first signaling comprises the first information;
wherein the first signaling comprises one or more of the following:
a UE capability signaling;
an uplink control information, UCI, signaling;
a radio resource control, RRC, signaling;
a signaling for transmitting data information; or
a signaling for model registration.

41. The network device of claim 40, wherein receiving the first information transmitted from the UE comprises:
transmitting a *UECapabilityEnquiry* message to the UE, wherein the *UECapabilityEnquiry* message comprises one or more of an application scenario, a network device configuration, a model function, or a maximum feedback quantity of models; and
receiving *UECapabilityInformation* transmitted from the UE, wherein the *UECapabilityInformation* comprises the first information.

42. The network device of claim 40, wherein receiving the first information transmitted from the UE comprises:
transmitting a UCI feedback resource configuration message to the UE, wherein the UCI feedback resource configuration message comprises one or more of a UCI feedback resource time-frequency position, an application scenario, a network device configuration, a model function, or a maximum feedback quantity of models; and
receiving UCI transmitted from the UE, wherein the UCI comprises the first information.

43. The network device of claim 40, wherein receiving the first information transmitted from the UE comprises:
transmitting an RRC request message to the UE, wherein the RRC request message comprises one or more of an application scenario, a network device configuration, a model function, or a maximum feedback quantity of models; and
receiving an RRC response message transmitted from the UE, wherein the RRC response message comprises the first information.

44. The network device of claim 40, wherein receiving the first information transmitted from the UE comprises:
transmitting a measurement configuration message to the UE, wherein the measurement configuration message comprises one or more of a measurement configuration, an application scenario, a network device configuration, a model function, or a maximum feedback quantity of models; and
receiving an RRC signaling, a UCI signaling, or a signaling for transmitting data information transmitted from the UE, wherein the RRC signaling, the UCI signaling, or the signaling for transmitting data information comprises the first information.

45. The network device of claim 40, wherein receiving the first information transmitted from the UE comprises:
transmitting a model registration trigger message to the UE, wherein the model registration trigger message comprises one or more of an application scenario, a network device configuration, a model function, or a maximum feedback quantity of models; and
receiving model registration information transmitted from the UE, wherein the model registration information comprises the first information.

46. The network device of claim 37 or 38, wherein after receiving the first information transmitted from the UE, the operations further comprise:
transmitting a radio resource control, RRC, configuration message to the UE based on the first information, wherein the RRC configuration message comprises one or more model identifications.

47. The network device of claim 37 or 38, wherein the operations further comprise:
transmitting a radio resource control, RRC, signaling or a media access control-control element, MAC-CE, to the UE, wherein the RRC signaling or the MAC-CE comprises one or more of a model identification, an activation indication, a deactivation indication, or a fallback indication.

48. The network device of claim 37 or 38, wherein after receiving the first information transmitted from the UE, the operations further comprise:
transmitting a model identification assignment message to the UE based on the first information, wherein the model identification assignment message comprises a model identification assigned by the network device.

49. An apparatus for model information reporting, comprising:
a determining unit, used for determining first information, wherein the first information is used to indicate one or more artificial intelligence, AI, or machine learning, ML, models, and the one or more AI/ML models are used for downlink beam prediction; and
a first transmitting unit, used for transmitting the first information to a network device.

50. The apparatus of claim 49, wherein the first information comprises one or more of the following:
a model identification;
an application scenario of a model;
a network device configuration applicable to a model;
a model function;
a quantity of input beams of a model;
a quantity of output beams of a model;
a type of a downlink reference signal, RS, applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

51. The apparatus of claim 50, wherein the model identification comprises one or more of the following:
a sequence number or a serial number of a model;
a dataset identification for model training;
an RS configuration identification for model training;
a beam description information identification for model training; or
information on a quantity of input beams and a quantity of output beams of a model.

52. The apparatus of any of claims 49 to 51, wherein transmitting the first information to the network device comprises:
transmitting a first signaling to the network device, wherein the first signaling comprises the first information;
wherein the first signaling comprises one or more of the following:
a UE capability signaling;
an uplink control information, UCI, signaling;
a radio resource control, RRC, signaling;
a signaling for transmitting data information; or
a signaling for model registration.

53. The apparatus of claim 52, wherein transmitting the first information to the network device comprises:
receiving a *UECapabilityEnquiry* message transmitted from the network device, wherein the *UECapabilityEnquiry* message comprises one or more of an application scenario, a network device configuration, a model function, or a maximum feedback quantity of models; and
transmitting *UECapabilityInformation* to the network device based on the *UECapabilityEnquiry* message, wherein the *UECapabilityInformation* comprises the first information.

54. The apparatus of claim 52, wherein transmitting the first information to the network device comprises:
receiving a UCI feedback resource configuration message transmitted from the network device, wherein the UCI feedback resource configuration message comprises one or more of a UCI feedback resource time-frequency position, an application scenario, a network device configuration, a model function, or a maximum feedback quantity of models; and
transmitting UCI to the network device based on the UCI feedback resource configuration message, wherein the UCI comprises the first information.

55. The apparatus of claim 52, wherein transmitting the first information to the network device comprises:
receiving an RRC request message transmitted from the network device, wherein the RRC request message comprises one or more of an application scenario, a network device configuration, a model function, or a maximum feedback quantity of models; and
transmitting an RRC response message to the network device based on the RRC request message, wherein the RRC response message comprises the first information.

56. The apparatus of claim 52, wherein transmitting the first information to the network device comprises:
receiving a measurement configuration message transmitted from the network device, wherein the measurement configuration message comprises one or more of a measurement configuration, an application scenario, a network device configuration, a model function, or a maximum feedback quantity of models; and
transmitting an RRC signaling, a UCI signaling, or a signaling for transmitting data information to the network device based on the measurement configuration message, wherein the RRC signaling, the UCI signaling, or the signaling for transmitting data information comprises the first information.

57. The apparatus of claim 52, wherein transmitting the first information to the network device comprises:
receiving a model registration trigger message transmitted from the network device, wherein the model registration trigger message comprises one or more of an application scenario, a network device configuration, a model function, or a maximum feedback quantity of models; and
transmitting model registration information to the network device based on the model registration trigger message, wherein the model registration information comprises the first information.

58. The apparatus of claim 49 or 50, further comprising a first receiving unit, used for:
receiving a radio resource control, RRC, configuration message transmitted from the network device, wherein the RRC configuration message comprises one or more model identifications; and
determining an AI/ML model for downlink beam prediction based on the RRC configuration message.

59. The apparatus of claim 49 or 50, further comprising a second receiving unit, used for:
receiving a radio resource control, RRC, signaling or a media access control-control element, MAC-CE, transmitted from the network device, wherein the RRC signaling or the MAC-CE comprises one or more of a model identification, an activation indication, a deactivation indication, or a fallback indication; and
performing model activation or deactivation or fallback operations based on the RRC signaling or the MAC-CE.

60. The apparatus of claim 49 or 50, further comprising an associating unit, used for:
receiving a model identification assignment message transmitted from the network device, wherein the model identification assignment message comprises a model identification assigned by the network device; and
associating the model identification assigned by the network device with a model indicated by the first information based on the model identification assignment message.

61. An apparatus for model information reporting, comprising:
a third receiving unit, used for receiving first information transmitted from a user equipment, UE, wherein the first information is used to indicate one or more artificial intelligence, AI, or machine learning, ML, models, and the one or more AI/ML models are used for downlink beam prediction.

62. The apparatus of claim 61, wherein the first information comprises one or more of the following:
a model identification;
an application scenario of a model;
a network device configuration applicable to a model;
a model function;
a quantity of input beams of a model;
a quantity of output beams of a model;
a type of a downlink reference signal, RS, applicable to a model;
a transmission sequence of downlink beams applicable to a model;
a downlink beam pattern applicable to a model;
a mapping relationship between a downlink beam identification and a physical downlink beam applicable to a model;
a downlink Tx beam identification applicable to a model; or
a quantity of times a downlink Tx beam is transmitted applicable to a model.

63. The apparatus of claim 62, wherein the model identification comprises one or more of the following:
a sequence number or a serial number of a model;
a dataset identification for model training;
an RS configuration identification for model training;
a beam description information identification for model training; or
information on a quantity of input beams and a quantity of output beams of a model.

64. The apparatus of any of claims 61 to 63, wherein receiving the first information transmitted from the UE comprises:
receiving a first signaling transmitted from the UE, wherein the first signaling comprises the first information;
wherein the first signaling comprises one or more of the following:
a UE capability signaling;
an uplink control information, UCI, signaling;
a radio resource control, RRC, signaling;
a signaling for transmitting data information; or
a signaling for model registration.

65. The apparatus of claim 64, wherein receiving the first information transmitted from the UE comprises:
transmitting a *UECapabilityEnquiry* message to the UE, wherein the *UECapabilityEnquiry* message comprises one or more of an application scenario, a network device configuration, a model function, or a maximum feedback quantity of models; and
receiving *UECapabilityInformation* transmitted from the UE, wherein the *UECapabilityInformation* comprises the first information.

66. The apparatus of claim 64, wherein receiving the first information transmitted from the UE comprises:
transmitting a UCI feedback resource configuration message to the UE, wherein the UCI feedback resource configuration message comprises one or more of a UCI feedback resource time-frequency position, an application scenario, a network device configuration, a model function, or a maximum feedback quantity of models; and
receiving UCI transmitted from the UE, wherein the UCI comprises the first information.

67. The apparatus of claim 64, wherein receiving the first information transmitted from the UE comprises:
transmitting an RRC request message to the UE, wherein the RRC request message comprises one or more of an application scenario, a network device configuration, a model function, or a maximum feedback quantity of models; and
receiving an RRC response message transmitted from the UE, wherein the RRC response message comprises the first information.

68. The apparatus of claim 64, wherein receiving the first information transmitted from the UE comprises:
transmitting a measurement configuration message to the UE, wherein the measurement configuration message comprises one or more of a measurement configuration, an application scenario, a network device configuration, a model function, or a maximum feedback quantity of models; and
receiving an RRC signaling, a UCI signaling, or a signaling for transmitting data information transmitted from the UE, wherein the RRC signaling, the UCI signaling, or the signaling for transmitting data information comprises the first information.

69. The apparatus of claim 64, wherein receiving the first information transmitted from the UE comprises:
transmitting a model registration trigger message to the UE, wherein the model registration trigger message comprises one or more of an application scenario, a network device configuration, a model function, or a maximum feedback quantity of models; and
receiving model registration information transmitted from the UE, wherein the model registration information comprises the first information.

70. The apparatus of claim 61 or 62, further comprising:
a second transmitting unit, used for transmitting a radio resource control, RRC, configuration message to the UE based on the first information, wherein the RRC configuration message comprises one or more model identifications.

71. The apparatus of claim 61 or 62, further comprising:
a third transmitting unit, used for transmitting a radio resource control, RRC, signaling or a media access control-control element, MAC-CE, to the UE, wherein the RRC signaling or the MAC-CE comprises one or more of a model identification, an activation indication, a deactivation indication, or a fallback indication.

72. The apparatus of claim 61 or 62, further comprising an assigning unit, used for:
transmitting a model identification assignment message to the UE based on the first information, wherein the model identification assignment message comprises a model identification assigned by the network device.

73. A computer-readable storage medium storing a computer program, wherein the computer program is used to cause a computer to perform the method of any of claims 1 to 12 or perform the method of any of claims 13 to 24.
